(19) Europäisches Patentamt
European Patent Office
Office européen des brevets

(11) EP 1 540 388 B1

(12) **EUROPEAN PATENT SPECIFICATION**

(45) Date of publication and mention of the grant of the patent:
**06.06.2012 Bulletin 2012/23**

(21) Application number: **03795423.7**

(22) Date of filing: **12.09.2003**

(51) Int Cl.:
***G02B 5/30*** *(2006.01)*

(86) International application number:
**PCT/JP2003/011698**

(87) International publication number:
**WO 2004/025338 (25.03.2004 Gazette 2004/13)**

(54) **RETARDER AND ELLIPTICAL POLARIZING PLATE**

RETARDIERER UND ELLIPTISCHE POLARISATIONSPLATTE

RETARDATEUR ET PLAQUE DE POLARISATION ELLIPTIQUE

(84) Designated Contracting States:
**AT BE BG CH CY CZ DE DK EE ES FI FR GB GR HU IE IT LI LU MC NL PT RO SE SI SK TR**

(30) Priority: **12.09.2002 JP 2002266363**
**12.12.2002 JP 2002360171**
**03.04.2003 JP 2003099831**

(43) Date of publication of application:
**15.06.2005 Bulletin 2005/24**

(73) Proprietor: **FUJIFILM Corporation**
**Minato-ku**
**Tokyo**
**106-0031 (JP)**

(72) Inventors:
- **TAKAHASHI, Yuta**
**Minami-ashigara-shi,**
**Kanagawa 250-0193 (JP)**
- **ICHIHASHI, Mitsuyoshi**
**Minami-ashigara-shi,**
**Kanagawa 250- 0193 (JP)**

(74) Representative: **HOFFMANN EITLE**
**Patent- und Rechtsanwälte**
**Arabellastraße 4**
**81925 München (DE)**

(56) References cited:
**US-A- 5 568 290 US-A1- 2003 016 446**

- **PATENT ABSTRACTS OF JAPAN vol. 1998, no. 08, 30 June 1998 (1998-06-30) & JP 10 068816 A (SHARP CORP), 10 March 1998 (1998-03-10) cited in the application**
- **PATENT ABSTRACTS OF JAPAN vol. 1998, no. 09, 31 July 1998 (1998-07-31) & JP 10 090521 A (SUMITOMO CHEM CO LTD), 10 April 1998 (1998-04-10)**
- **PATENT ABSTRACTS OF JAPAN vol. 2002, no. 07, 3 July 2002 (2002-07-03) & JP 2002 071949 A (FUJI PHOTO FILM CO LTD), 12 March 2002 (2002-03-12)**
- **PATENT ABSTRACTS OF JAPAN vol. 017, no. 302 (P-1553), 10 June 1993 (1993-06-10) & JP 05 027119 A (NITTO DENKO CORP), 5 February 1993 (1993-02-05)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 540 388 B1

## Description

Technical Field

The present invention relates to retarders and elliptical polarizing plates which may be used in various optical pickup systems or various displays such as reflective type or transflective type LCDs used as office automation equipments and mobile computers.

Related Art

Quarter wave plates can be used for various purposes and have already been practically used in reflective type LCDs, optical pickups for optical disks or PS converting devices. However, most of quarter wave plates achieve λ/4 only at a specific wavelength though they are called quarter wave plates. The retarders prepared by laminating two optically anisotropic polymer films are described in JPA No. 1998-90521 (the term "JPA" as used herein means an "unexamined published Japanese patent application") or the like. A retarder consisting of a quarter-wave plate generating a quarter wavelength phase difference and a half-wave plate generating a half wavelength phase difference, which are laminated such that their optic axes cross, is described in JPA No. 1998-68816. A retarder comprising at least two retarders having a retardation value of 160-320 nm, which are laminated at an angle such that their slow axes are neither parallel nor orthogonal to each other, is described in JPA No. 1998-90521. The retarders described in the documents having laminated structures of two or more polymer films, and the documents explain that λ/4 can be achieved in a wide wavelength region by retarders such laminated structures.

On the other hand, a broad band quarter wavelength plate having laminated plural optically anisotropic layers formed of liquid-crystalline molecules is described in JPA No. 2001-483. However, when such a broad band quarter wavelength plate is practically used in a LCD, and then, the displaying screen of such a LCD is observed from an oblique direction, the contrast tends to fall and the brightness inversion is sometimes found.

Summary of The Present Invention

One object of the present invention is to provide a retarder and an elliptically polarizing plate can contribute to improvement in a viewing-angle property of LCDs.

In one aspect, the present invention provides a retarder having retardation to wavelength ratios within a range from 0.2 to 0.3 at 450 nm, 550nm and 650nm respectively, comprising:

a first optically anisotropic layer substantially generating a phase difference of n at 550 nm,
a second optically anisotropic layer substantially generating a phase difference of n/2 at 550 nm, and
a third optically negative anisotropic layer.

As embodiments of the present invention, the retarder wherein at least one of the first and second layers is formed of a composition comprising a liquid crystal compound; the retarder wherein the third layer is formed of a composition comprising a liquid crystal compound; and the retarder wherein the third layer is formed of triacetyl cellulose; were provided.

In another aspect, the present invention provides an elliptical polarizing plate comprising a linear polarizing film and a retarder having retardation to wavelength ratios in a range of 0.2 to 0.3 at 450 nm, 550nm and 650nm respectively, comprising:

a first optically anisotropic layer substantially generating a phase difference of n at 550 nm,
a second optically anisotropic layer substantially generating a phase difference of n/2 at 550 nm, and
a third optically negative anisotropic layer.

As embodiments of the present invention, the elliptical polarizing plate wherein at least one of the first and second layers is formed of a composition comprising a liquid crystal compound; the elliptical polarizing plate wherein the third layer is formed of a composition comprising a liquid crystal compound; the elliptical polarizing plate wherein the third layer is formed of triacetyl cellulose; the elliptical polarizing plate further comprising a protective film for protecting the linear polarizing film wherein Rth, defined by the following formula, of the third optically negative anisotropic layer is from 30 to 250 nm larger than that of the protective film, at 589.3 nm:

$$Rth = [\{(nx + ny)/2\}-nz] \times d$$

where nx and ny are major refractive indexes in plane of the layer or film, nz is a major refractive index along a thickness direction of the film or the layer, and d is a thickness of the film or the layer; and the elliptical polarizing plate, wherein no layer other than an optically isotropic adhesive layer is disposed between the linear polarizing film and the first optically anisotropic layer; were provided.

Brief Description of The Drawings

Fig.1 is a schematic drawing of an exemplary retarder of the present invention.
Fig.2 is a schematic drawing showing a relationship of slow axes of the optically anisotropic layers shown in Fig.1.
Fig. 3 is a schematic drawing of an exemplary elliptically polarizing plate of the present invention.
Fig. 4 is a schematic drawing showing a relationship of optical axes of layers and polarizing film shown in Fig.3.

Detailed Description of The Invention

[Optical properties of retarders of the present invention]

The retarder of the present invention comprises a first optically anisotropic layer substantially generating a phase difference of n at 550 nm, a second optically anisotropic layer substantially generating a phase difference of n/2 at 550 nm, and a third optically negative anisotropic layer. The retarder of the present invention has retardation to wavelength ratios within a range from 0.2 to 0.3 at 450 nm, 550nm and 650nm respectively.
In order to obtain a n phase difference at a wavelength (λ) through an optically anisotropic layer, it is necessary to prepare the layer so as to adjust the measured retardation of the layer to λ/2 at the λ. In order to obtain a n/2 phase difference at a wavelength (λ) through an optically anisotropic layer, it is necessary to prepare the layer so as to adjust the measured retardation of the layer to λ/4 at the λ. It is preferable that the optically anisotropic layers can generate n and n/2 phase differences respectively at 550 nm, which is mostly the middle of visible light range. That is, the first optically anisotropic layer desirably has retardation in the range from 200 to 300 nm, and more desirably from 220 to 280 nm, at 550 nm. The second optically anisotropic layer desirably has retardation in the range from 70 to 190 nm, and more desirably from 80 to 160 nm, at 550 nm.
The third optically negative anisotropic layer has a negative birefringence, and thus satisfies the formula (1) bellow. The Rth, which is defined by the formula (2) bellow, of the third layer is desirably in the range from 30 to 300 nm; and more desirably from 50 to 250 nm, at 589.3 nm. It is also preferred that the nx and ny of the third layer are substantially equal to each other.

$$(1) \quad nx \geqq ny > nz$$

$$(2) \quad Rth = \{(nx + ny)/2 - nz\} \times d$$

In the formulae, nx and ny are major refractive indexes in plane of the layer or film, nz is a major refractive index along a thickness direction of the film or the layer, and d is a thickness of the film or the layer.
The elliptically polarizing plate of the present invention comprises a linear polarizing film and the retarder of the present invention. The first and second optically anisotropic layers and the linear polarizing film are laminated so that the combination of the optical directions thereof can generate an approximate circular polarized light theoretically. The broad band quarter wavelength can be generated through such a laminated structure. According to one embodiment of the broad band quarter wavelength, through which approximate circular polarized light can be generated, the slow axes of the first and second optically anisotropic layers cross at 60 degrees; the slow axis of the first layer and the polarizing axis, along which the maximum transmission in plane is obtained, of the linear polarizing film cross at 15 degrees; and the slow axis of the second layer and the transmission axis of the linear polarizing film cross at 75 degrees. According to another embodiment of the broad band quarter wavelength, through which approximate circular polarized light can be generated, the slow axes of the first and second optically anisotropic layers cross at 60 degrees; the slow

axis of the first layer and the polarizing axis of the linear polarizing film cross at 75 degrees; and the slow axis of the second layer and the polarizing axis of the linear polarizing film cross at 15 degrees. These angles may have a margin of error of ± 10 degrees, desirably ± 8 degrees, preferably ± 6 degrees, more preferably ± 5 degrees and much more preferably ± 4 degrees.

The layers in the retarder of the present invention are desirably disposed in order of the first, the second and the third optically anisotropic layers. The elliptically polarizing plate of the present invention desirably comprises the three layers disposed in same order, and more desirably the three layers and a linear polarizing film disposed in order of the linear polarizing plate, the first, the second and the third layers.

In the present *specification,* the term of "broadband quarter wave plate" is used for any quarter wave plates having retardation to wavelength ratios measured at 450 nm, 550 nm and 650 nm fall within a range from 0.2 to 0.3 respectively. The retardation to wavelength ratio is preferably within a range from 0.21 to 0.29, more preferably 0.22 to 0.28, still more preferably 0.23 to 0.27, and most preferably from 0.24 to 0.26.

[Constitutions of Retarder and Elliptically Polarizer Plate]

Fig. 1 is a schematic drawing of an exemplary retarder of the present invention. As shown in Fig. 1, the basic retarder of the present invention consists of the first optically anisotropic layer (A), the second optically anisotropic layer (B) and the third optically negative anisotropic layer (C).

Fig. 2 is a schematic drawing showing a relationship of slow axes of the optically anisotropic layers. The angle ($\alpha$) in a plane between slow axes ("a" and "b" in Fig.2) of the first and second optically anisotropic layers is desirably in a range of 50 to 70 degrees.

Fig. 3 is a schematic drawing of an exemplary elliptically polarizing plate of the present invention. As shown in Fig. 3, the basic elliptically polarizing plate of the present invention consists of the linear polarizing film (p), the first optically anisotropic layer (A), the second optically anisotropic layer (B) and the third optically negative anisotropic layer (C).

Fig. 4 is a schematic drawing showing a relationship of optical axes of the layers and polarizing film. The angle ($\alpha$) in a plane between slow axes ("a" and "b" in Fig.4) of the first and second optically anisotropic layers is desirably in a range of 50 to 70 degrees. The angle ($\beta$) in a plane between the slow axis ("a" in fig. 4) of the first layer and the transmission axis or absorption axis ("p" in Fig. 4) of the linear polarizing film is desirably in a range of 10 to 20 degrees.

[First and Second Optically Anisotropic Layers]

The first and second optically anisotropic layers may be formed of an optically anisotropic polymer film respectively. The examples of polymer materials of such films include polyolefins such as polyethylene, polypropylene or norbornene based polymers, polycarbonates, polyarylates, polysulfones, polyvinylalcohols, polymethacrylates, polyacrylates and cellulose esters such as cellulose triacetate or cellulose diacetate. The copolymers or mixtures thereof may be also employed in the present invention.

The optically anisotropic polymer film may be prepared by stretching, desirably by a uniaxial stretcher, and more desirably by an ordinate uniaxial stretcher which stretches a film in a longitudinal direction by utilizing differences in peripheral velocities of plural roles or by a tenter stretcher which stretches a film in a width direction by grasping both sides of the film. The polymer film prepared by solvent casting is also desirable since its birefringence is uniform. The thickness of the polymer film is desirably in a range of 20 to 500 micro meters, more desirably 50 to 200 micro meters and much more desirably 50 to 100 micro meters.

The polymer film may consist of plural layers in order to satisfy the above optical properties.

The first and second optically anisotropic layers may be formed of a composition comprising a liquid crystal compound respectively. The examples of the liquid crystal compound include rod-like or disk-like liquid-crystalline compounds. In the optically anisotropic layers, the rod-like or disk-like molecules are desirably aligned in a substantially uniform manner, more desirably fixed in a substantially uniformly aligned manner, and most preferably fixed by polymerization reaction. One embodiment of the present invention, one of the first or second optically anisotropic layers is prepared by aligning liquid-crystalline molecules so that the slow axis of the layer is in a direction at 15 degrees relative to a longitudinal direction, and another is prepared by aligning liquid-crystalline molecules so that the slow axis is in a direction at 75 degrees relative to a longitudinal direction.

When rod-like liquid-crystalline compounds are employed in the present invention, it is preferred that the rod-like molecules are substantially aligned homogenously. It is to be noted now that the term of "homogeneous alignment" is used for any alignments having a mean tilt angle, which is a mean angle between the long axis of the rod-like molecule

and the layer plane, of 0 to 40 degrees. In the case of that the rod-like molecules are tilt aligned or hybrid aligned in the optically anisotropic layers, the mean tilt angle is again desirably in the range of 0 to 40 degrees.

The examples of the rod-like liquid-crystalline compounds include azomethines, azoxys, cyanobiphenyls, cyanophenyl esters, benzoic acid esters, cyclohexanecarboxylic acid phenyl esters, cyanophenylcyclohexanes, cyano-substituted phenylpyrimidines, alkoxy-substituted phenylpyrimidines, phenyl dioxanes, tolans and alkenylcyclohexyl benzonitriles. Not only low-molecular-weight liquid-crystalline compounds as mentioned above but also high-molecular-weight liquid-crystalline compounds can be used. The rod-like liquid-crystalline molecules may be fixed in an alignment state by polymerization. The examples of the polymerizable rod-like liquid-crystalline compound include those described in "Makromol. Chem., Vol. 190, p. 2255(1989)"; "Advanced Materials Vol. 5, p. 107 (1993)"; US Patents Nos. 4, 683, 327, 5, 622, 648 and 5,770,107; International Publications WO95/22,586, WO95/24,455, W097/00,600, W098/23,580 and WO98/52905; JPA No. 1989-272551, JPA No. 1994-16616, JPA No.1995-110469 JPA No. 1999-80081 and JPA No. 2001-328973.

The rod-like liquid-crystalline compound denoted by the Formula (I) is desirably used.

Formula (I) $Q^1\text{-}L^1\text{-}Cy^1\text{-}L^2\text{-}(Cy^2\text{-}L^3)_n\text{-}Cy^3\text{-}L^4\text{-}Q^2$

In the Formula (I), $Q^1$ and $Q^2$ respectively denote a polymerizable group; $L^1$ and $L^4$ respectively denote a divalent linking group; $L^2$ and $L^3$ respectively denote a single bond or divalent linking group; $Cy^1$, $Cy^2$ and $Cy^3$ respectively denote a divalent cyclic group; and n is 0, 1 or 2.

The polymerizable rod-like liquid-crystalline compound denoted by the formula (I) will be described in detail.

In the formula (I), $Q^1$ and $Q^2$ respectively denote a polymerizable group. The polymerizable group may be addition polymerizable, which includes the meaning of "ring opening polymerizable", or condensation polymerizable. Preferably, $Q^1$ and $Q^2$ respectively denote a group capable of addition polymerization or condensation polymerization. The examples of the polymerizable groups are shown bellow.

(Q-1) $-CH=CH_2$

(Q-2) $-CH=CH-CH_3$

(Q-3) $-CH=CH-C_2H_5$

(Q-4) $-CH=CH-n\text{-}C_3H_7$

(Q-5)

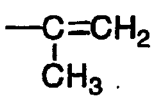

(Q-6)

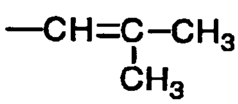

(Q-7) $-C\equiv CH$

(Q-8)

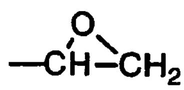

(Q-9)

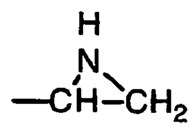

(Q-10) $-SH$

(Q-11) $-CHO$

(Q-12) $-OH$

(Q-13) $-CO_2H$

(Q-14) $-N=C=O$

(Q-15) $-NH_2$

(Q-16) $-SO_3H$

(Q-17) $-N=C=S$

Among them, unsaturated polymerizable groups, Q-1 to Q-7, epoxy group Q-8 and aziridinyl Q-9 are desirable, Q-1 to Q-7 are more desirable and ethylenic unsaturated polymerizable group, Q-1 to Q-6, are much more desirable.

$L^1$ and $L^4$ respectively denote a divalent liking group. Preferably, $L^1$ and $L^4$ respectively denote a group selected from the group consisting of -O-, -S-, -CO-, $-NR^2-$, a divalent chain group, a divalent cyclic group and any combinations thereof. $R^2$ is a C1-7 alkyl group or hydrogen atom, desirably a C1-4 alkyl group or hydrogen atom and preferably methyl, ethyl or hydrogen atom and more preferably hydrogen atom. The examples of the combination linking groups are shown bellow. In the following examples, the left end of an exemplified group is bonded to $Q^1$ or $Q^2$ and the right end is bonded to $Cy^1$ or $Cy^3$.

L-1:-CO-O-{a divalent chain group}-O-
L-2: -CO-O-{a divalent chain group}-O-{a divalent cyclic group}-CO-O-
L-3:-CO-O-{a divalent chain group}-O-{a divalent cyclic group}-O-CO-
L-4:-CO-O-{a divalent chain group}-O-{a divalent cyclic group}-{a divalent chain group}-
L-5:-CO-O-{a divalent chain group}-O-{a divalent cyclic group}-
L-6:-CO-O-{a divalent chain group}-O-{a divalent cyclic group}-{a divalent chain group}-CO-O-

L-7:-CO-O-{a divalent chain group}-O-{a divalent cyclic group}-O-CO-{a divalent chain group}-

The term of "divalent chain group" is the general term for substituted or non-substituted alkylene group, substituted or non-substituted alkenylene group and substituted or non-substituted alkynylene group. The divalent chain group is desirably substituted or non-substituted alkylene group or substituted or non-substituted alkenylene group, and more desirably non-substituted alkylene group or non-substituted alkenylene group.

The non-substituted alkylene group may have a straight chain or branched chain structure. The number of the carbon atoms included in the non-substituted alkylene group is desirably 1 to 12, preferably 2 to 10 and more preferably 3 to 8. The alkylene chain portion of the substituted alkylene group is identically defined with the non-substituted alkylene group above and their preferred scopes are also identical. The examples of the substituent group for the alkylene group include halogen atoms.

The non-substituted alkenylene group may have a straight chain or branched chain structure. The number of the carbon atoms included in the non-substituted alkenylene group is desirably 2 to 12, preferably 2 to 8 and more preferably 2 to 4. The alkenylene chain portion of the substituted alkenylene group is identically defined with the non-substituted alkenylene group above and their preferred scopes are also identical. The examples of the substituent group for the alkenylene group include halogen atoms.

The non-substituted alkynylene group may a have straight chain or branched chain structure. The number of the carbon atoms included in the non-substituted alkynylene group is desirably 2 to 12, preferably 2 to 8 and more preferably 2 to 4. The alkynylene chain portion of the substituted alkynylene group is identically defined with the non-substituted alkynylene group above and their preferred scopes are also identical. The examples of the substituent group for the alkynylene group include halogen atoms.

The divalent cyclic group is identically defined with $Cy^1$, $Cy^2$ and $Cy^3$ to be hereinafter described and their preferred examples are identical.

$L^2$ and $L^3$ respectively denote a single bond or divalent linking group. Preferably, $L^2$ and $L^3$ respectively denote a single bond or divalent linking group selected from the group consisting of -O-, -S-, -CO-, $-NR^2-$, a divalent chain group, a divalent cyclic group and any combinations thereof. $R^2$ is hydrogen or C1-7 alkyl group, desirably hydrogen or C1-4 alkyl group, preferably hydrogen, methyl or ethyl, and more preferably hydrogen. The divalent chain group and divalent cyclic group are identically defined with those denoted respectively by $L^1$ and $L^4$.

In the Formula (I), n is 0, 1 or 2. When n is 2, two of $L^3$ may be identical or different and two of $Cy^2$ may also be identical or different, n is desirably 1 or 2, and more desirably 1.

In the Formula (I), $Cy^1$, $Cy^2$ and $Cy^3$ respectively denote a divalent cyclic group.

The divalent cyclic group includes at least a ring, desirably a five-membered, six-membered or seven-membered ring, preferably a five-membered or six-membered ring and more preferably a six-membered ring. The divalent cyclic group may include a condensed ring, however, non-condensed rings are preferred to condensed rings. The divalent cyclic group may include an aromatic, aliphatic or hetero ring. The examples of the aromatic ring include benzene and naphthalene ring. The examples of the aliphatic ring include cyclohexane ring. The examples of the hetero ring include pyridine and pyrimidine ring.

Among the divalent cyclic groups including a benzene ring, 1,4-phenylene is desirable. Among the divalent cyclic groups including a naphthalene ring, naphthalene-1,5-diyl and naphthalene-2,6-diyl are desirable. Among the divalent cyclic groups including a cyclohexane ring, 1,4-cyclohexylene is desirable. Among the divalent cyclic groups including a pyridine ring, pyridine-2,5-diyl is desirable. Among the divalent cyclic groups including a pyrimidine ring, pyrimidine-2,5-diyl is desirable. Among them, 1,4-phenylene and 1,4-cyclohexyl are desirable.

The divalent cyclic group may be substituted or non-substituted. The examples of the substituent for the divalent cyclic group include halogen atoms, cyano, nitro, C1-5 alkyl group, C1-5 alkyl halide group, C1-5 alkoxy group, C1-5 alkylthio group, C1-5 acyl group, C2-6 acyloxy group, C2-6 alkoxycarbonyl group, carbamoyl, C2-6 alkylcarbamoyl group and C2-6 amido group.

The specific examples of the polymerizable liquid-crystalline compounds denoted by the Formula (I) are shown bellow, however, liquid-crystalline compounds that can be employed in the present invention are not limited to these compounds.

(N1) 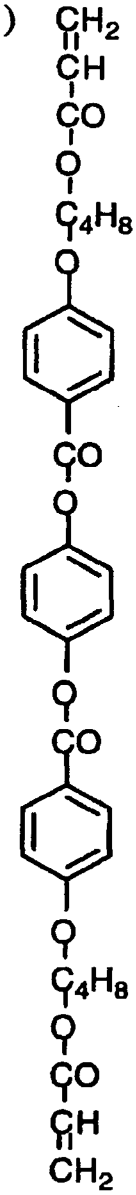 (N2) 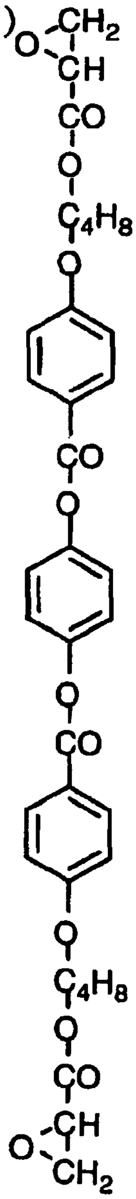 (N3) 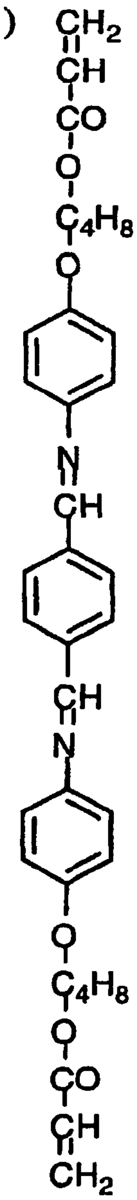 (N4) 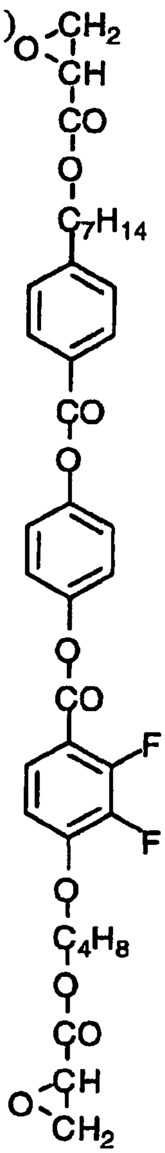 (N5) 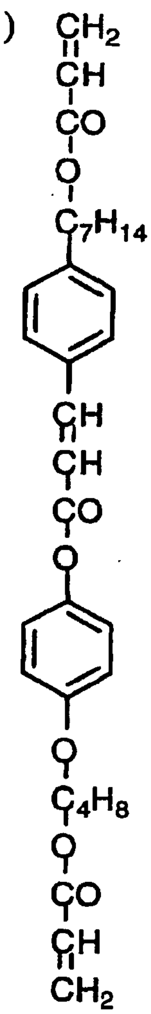

(N6) 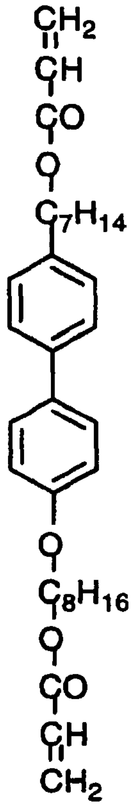 (N7) 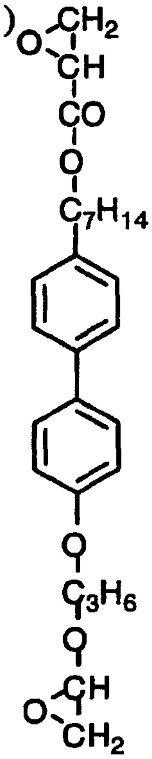 (N8) 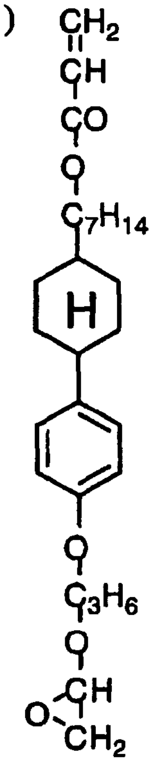 (N9) 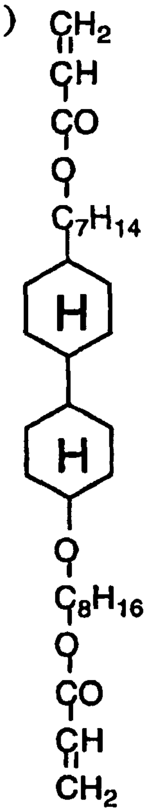

(N10) 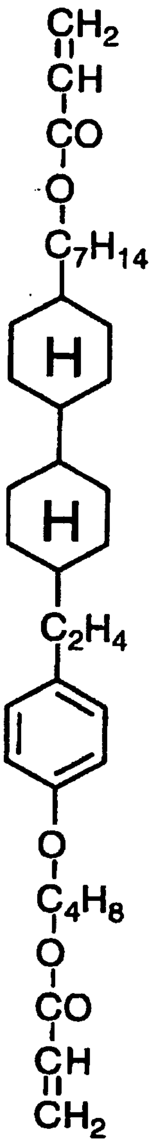 (N11) 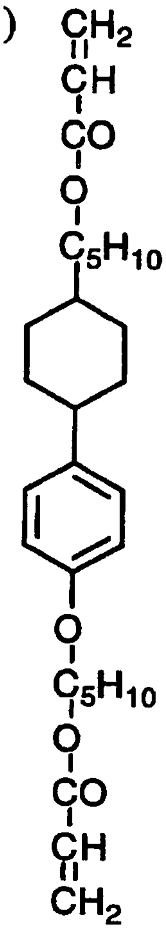 (N12) 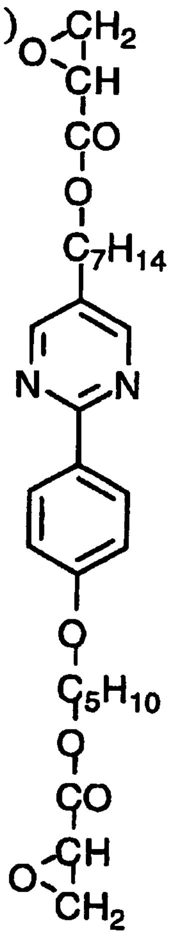 (N13) 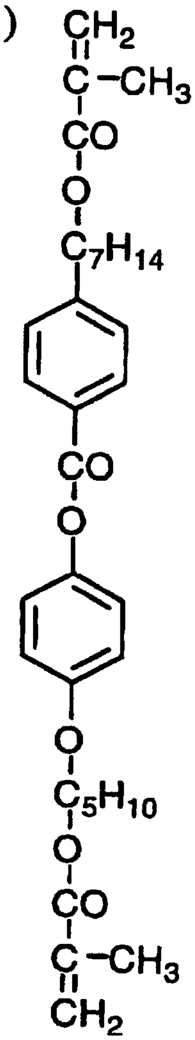

(N14)

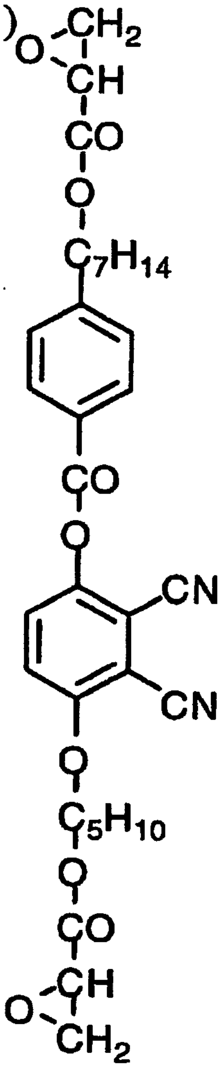

(N15)

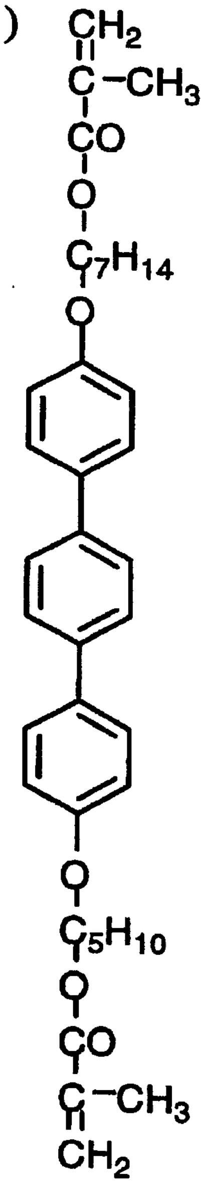

(N16)

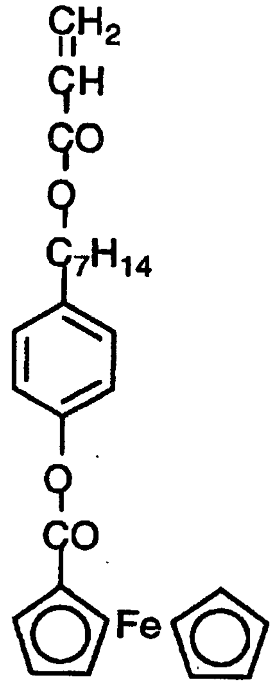

(N17)

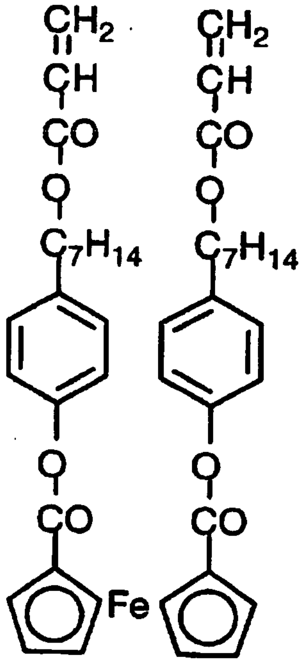

(N18)

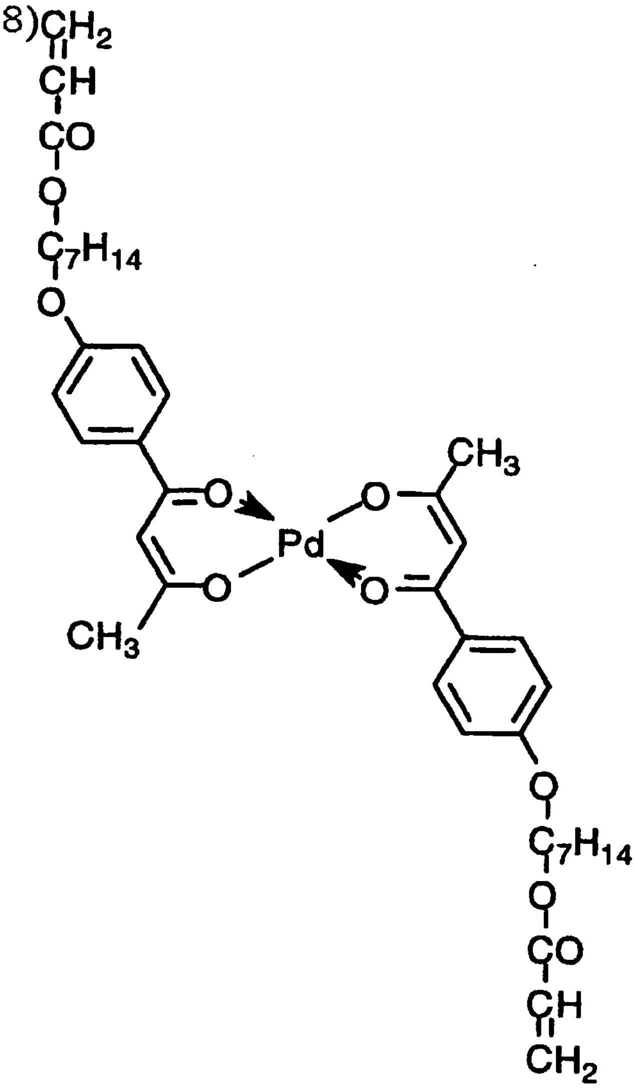

(N19)

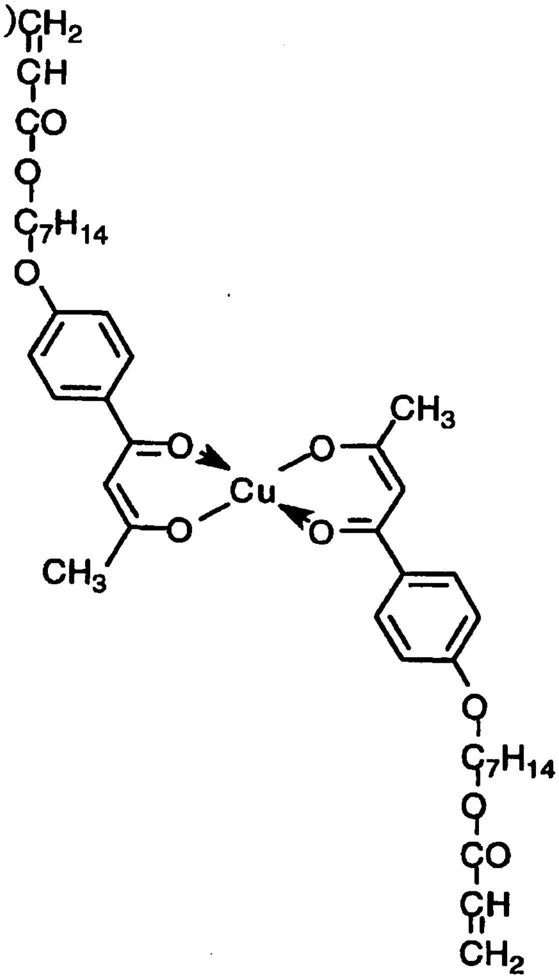

(N20)

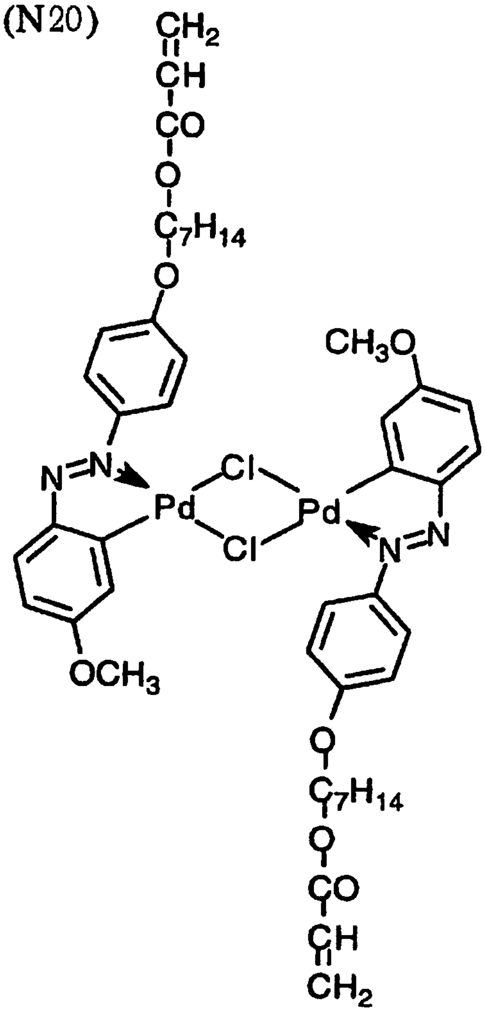

(N21)

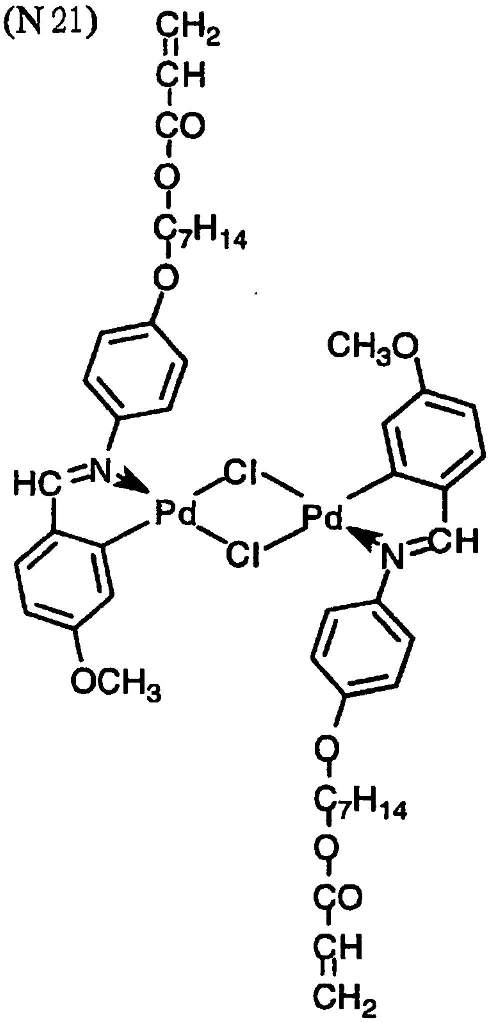

(N22)

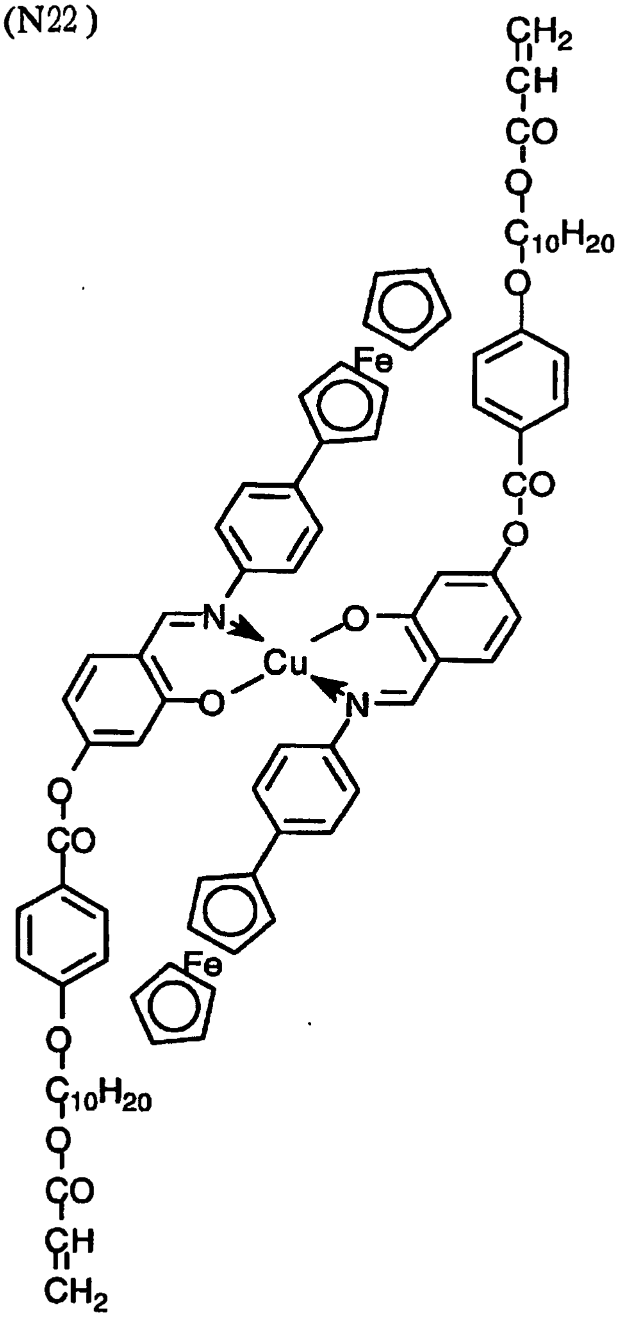

(N23)

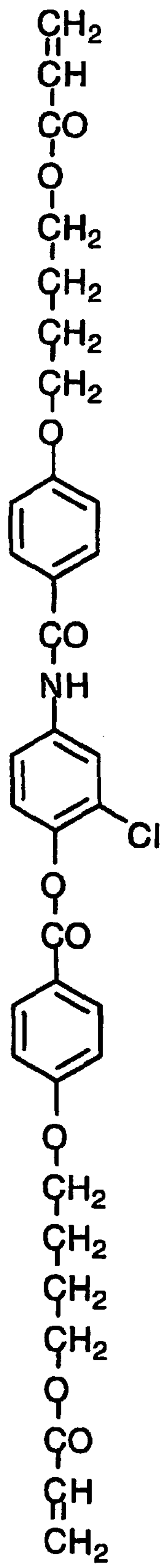

(N24)

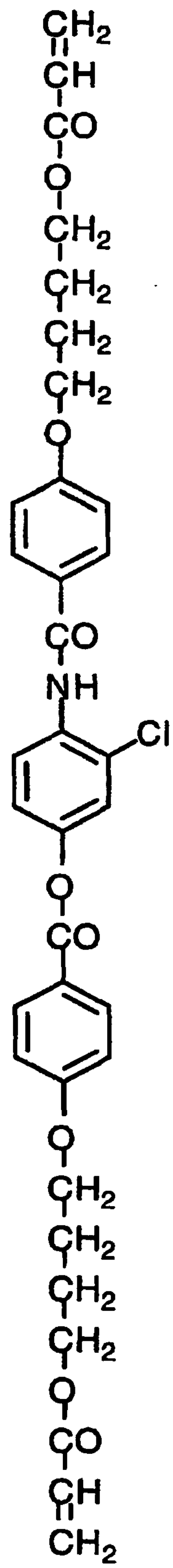

(N25)

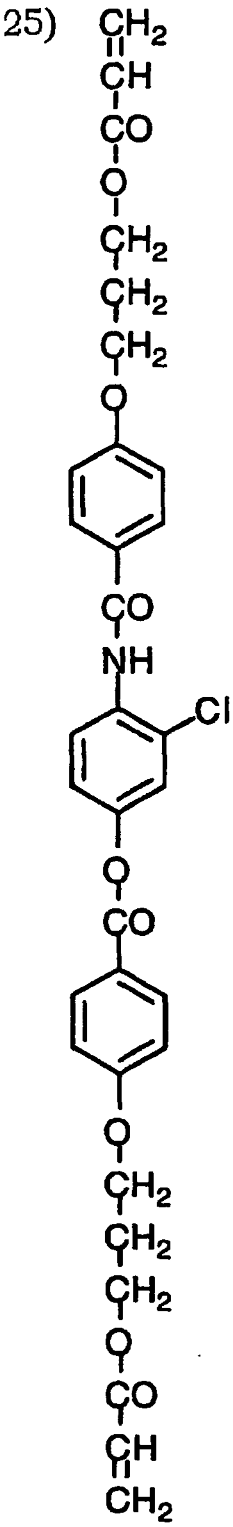

(N26)

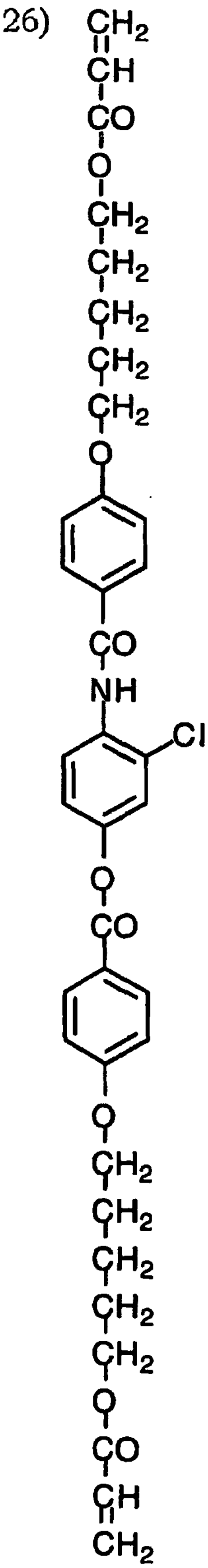

(N27)

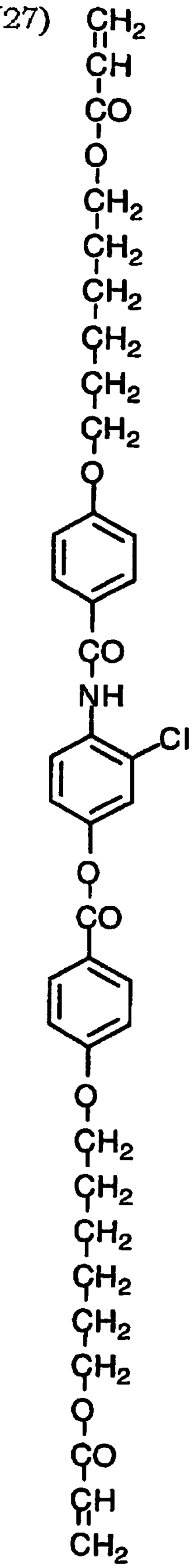

(N28)

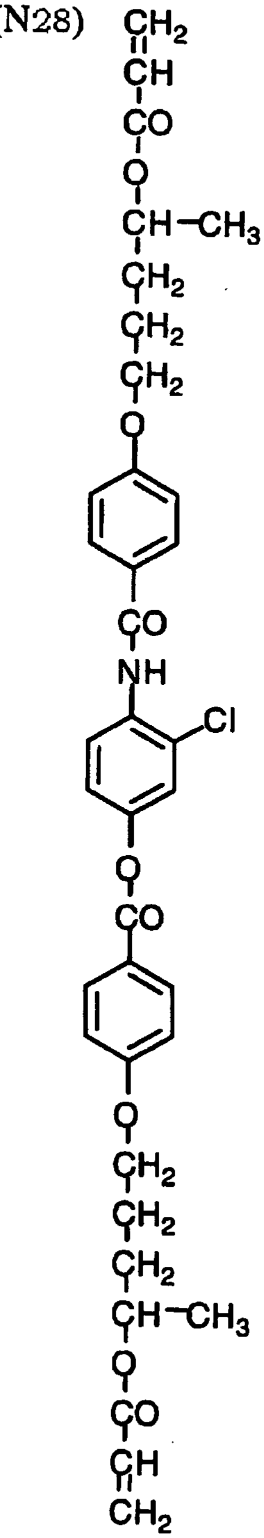

(N29)

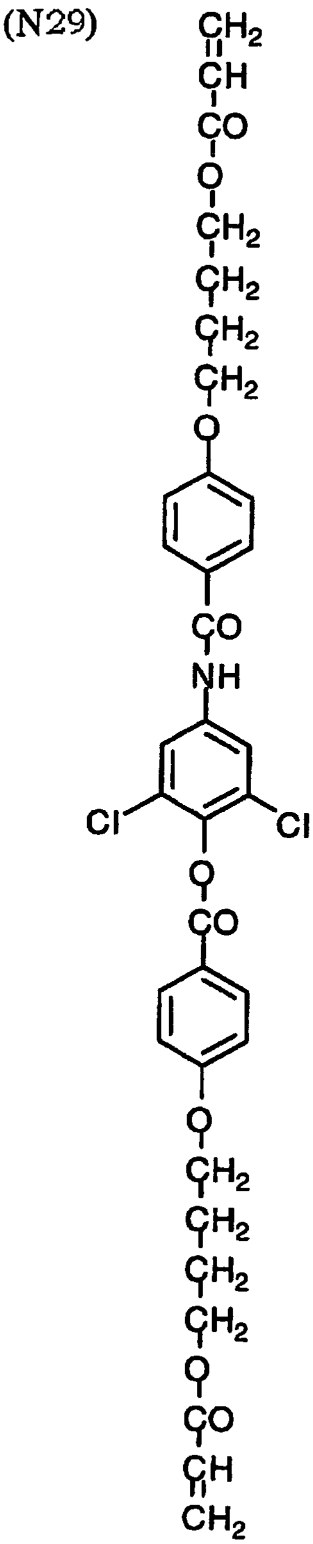

(N30)

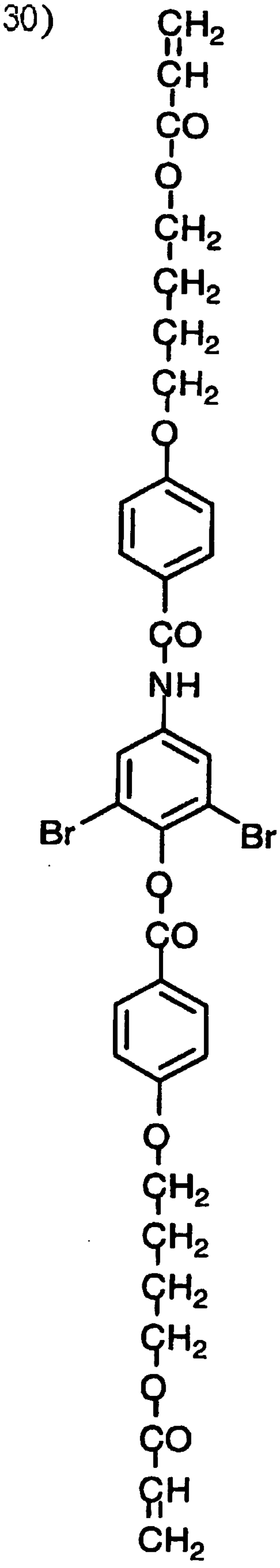

(N31)

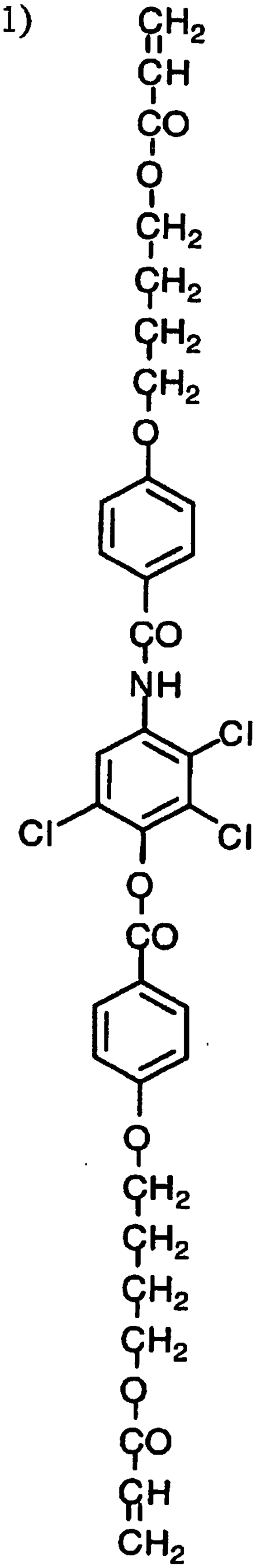

(N32)

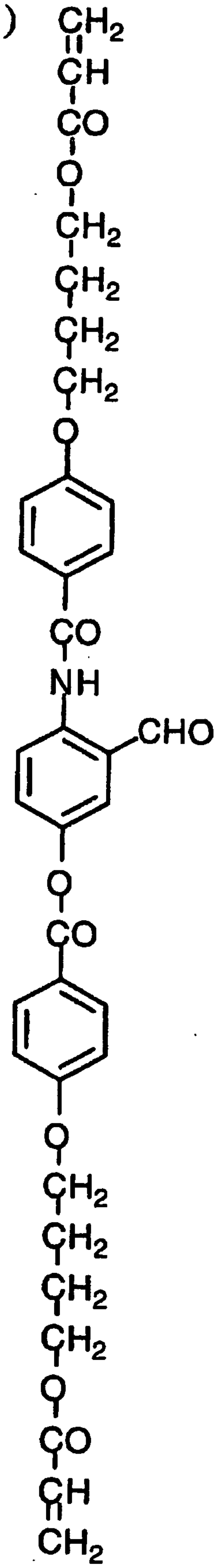

(N33)

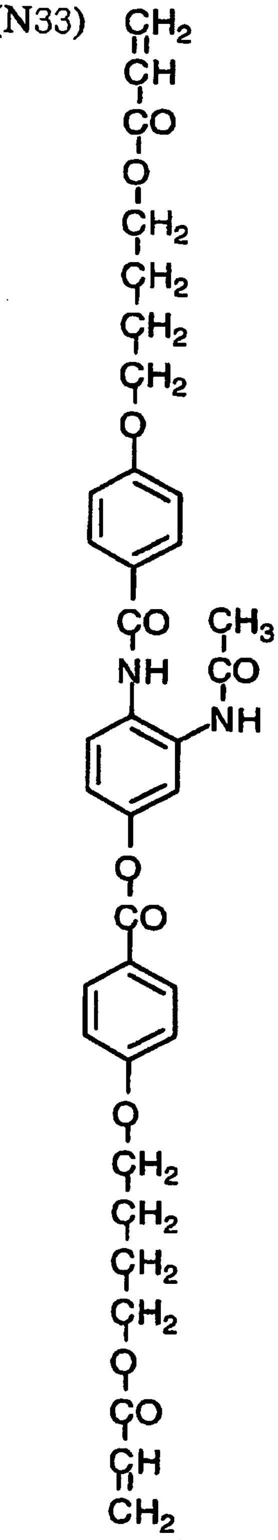

(N34)

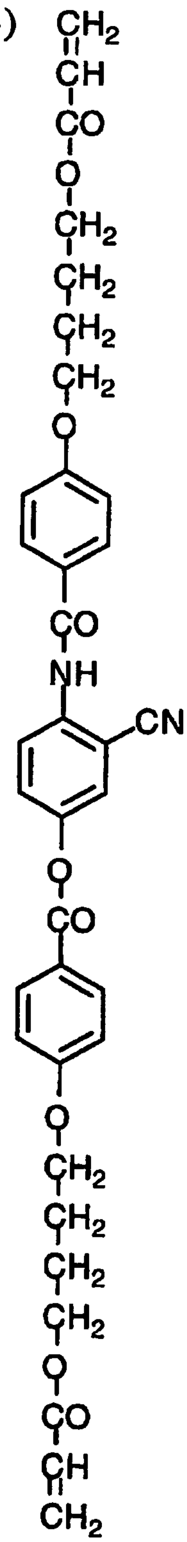

(N35)

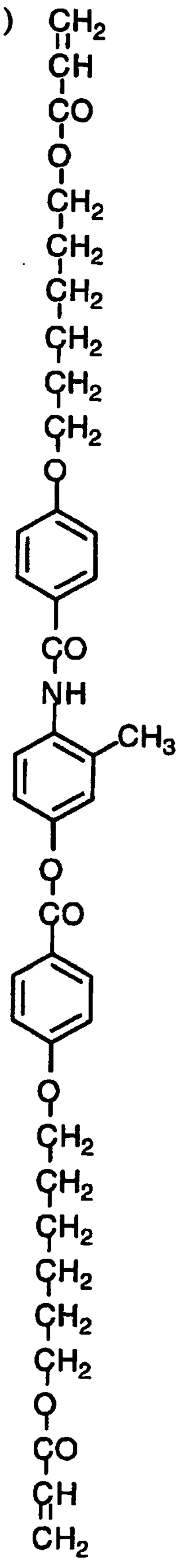

(N36)

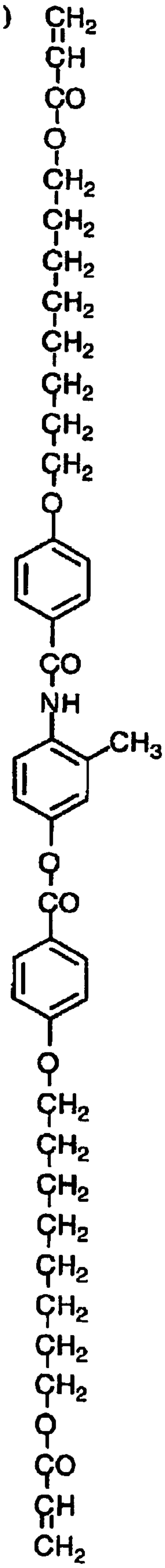

(N37)

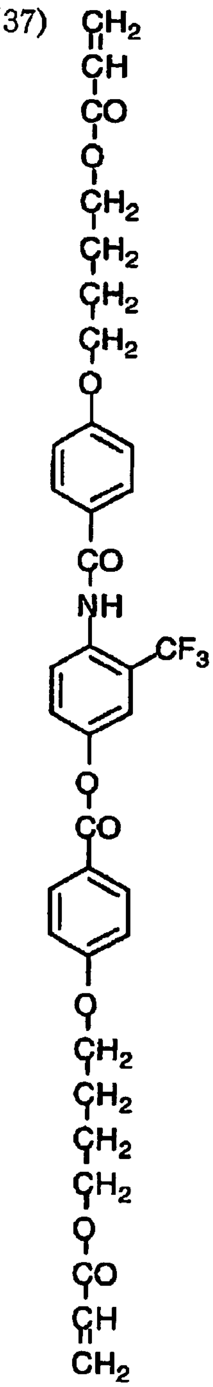

(N38)

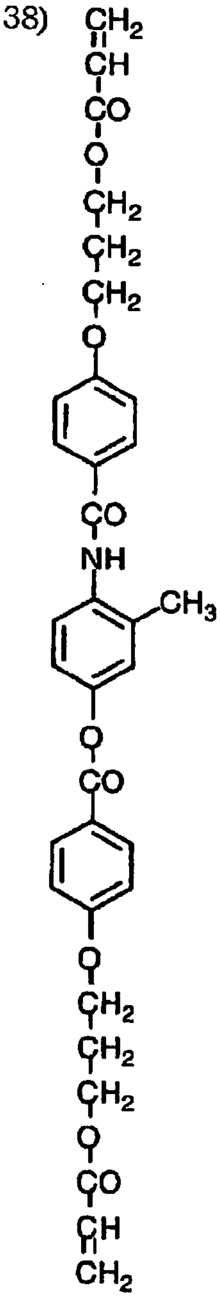

(N39)

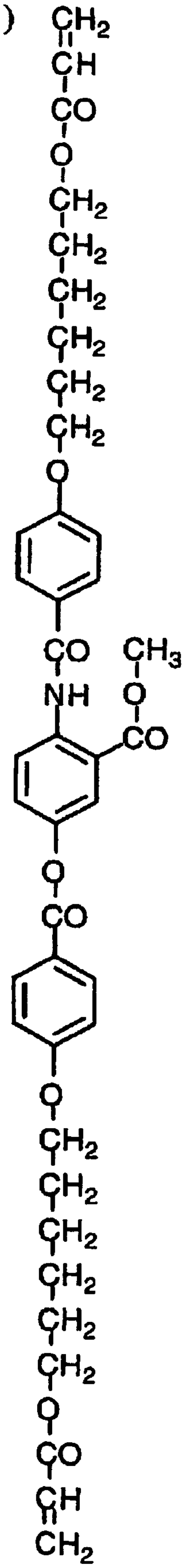

(N40)

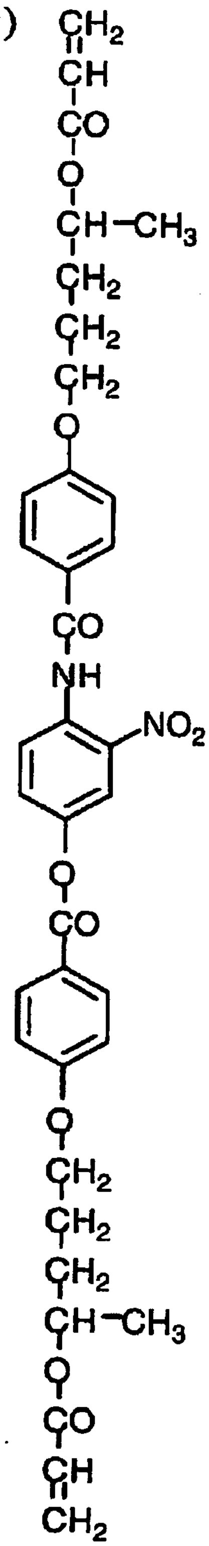

(N41)

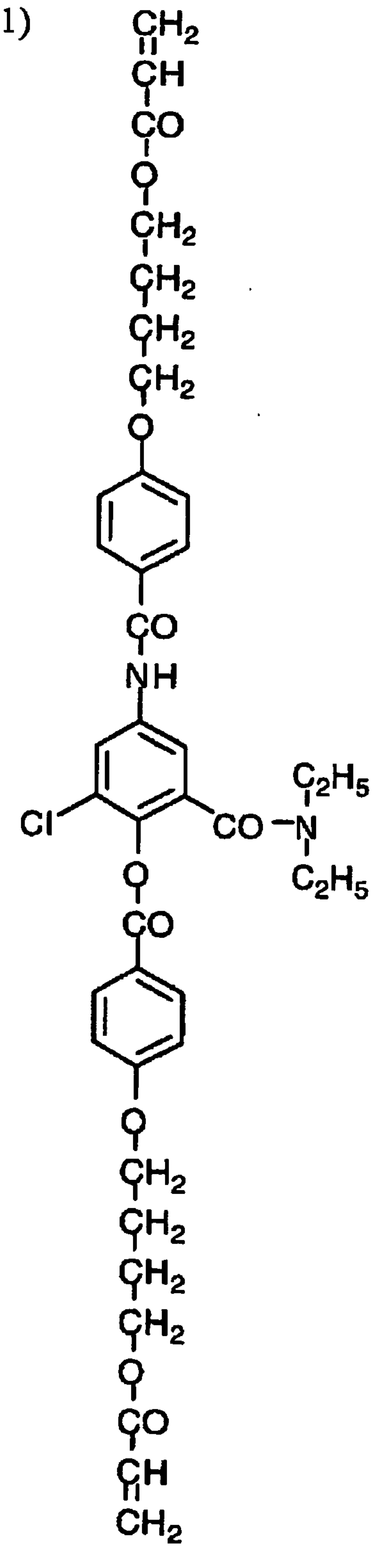

(N42)

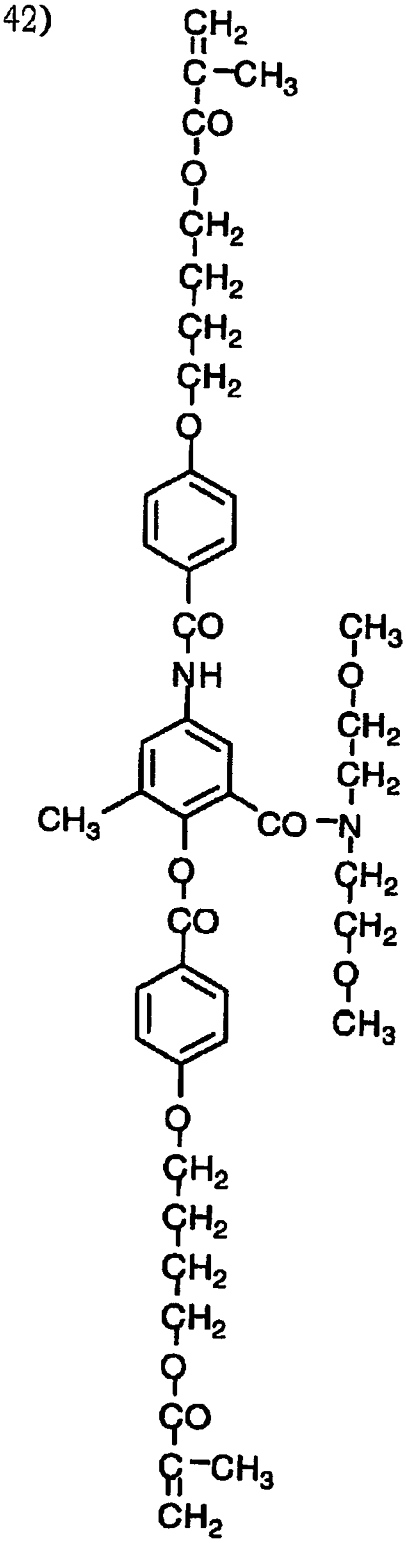

(N43)

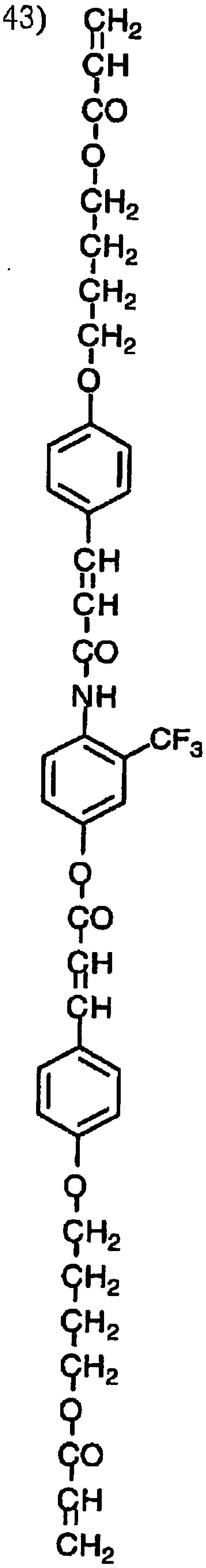

(N44)

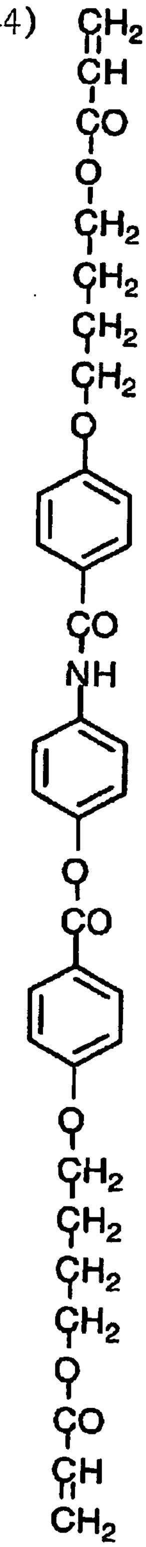

(N45)

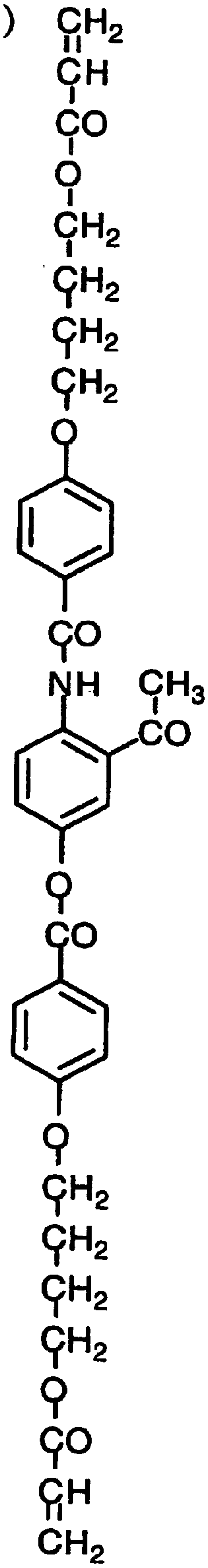

(N46)

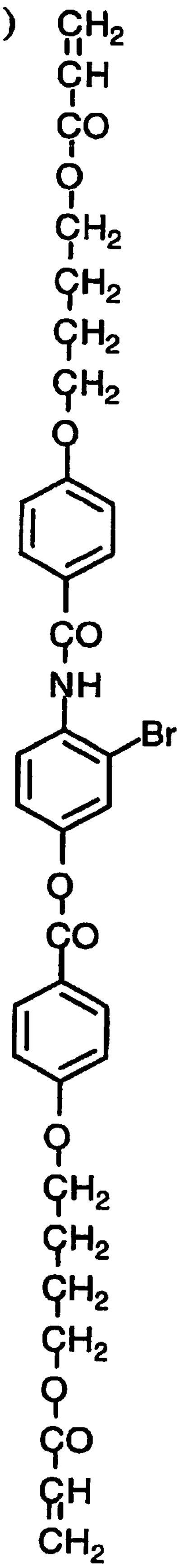

(N47)

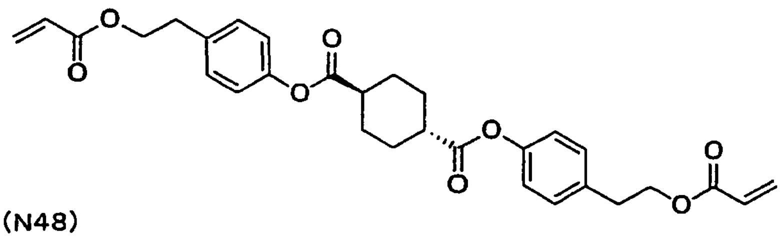

(N48)

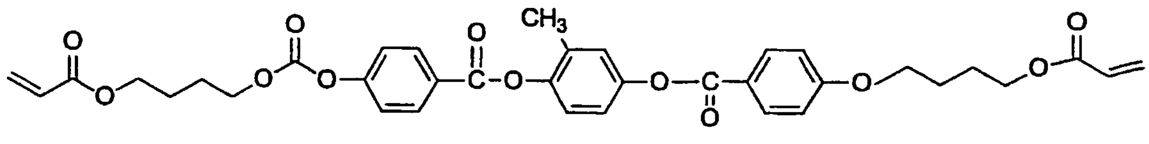

(N49)

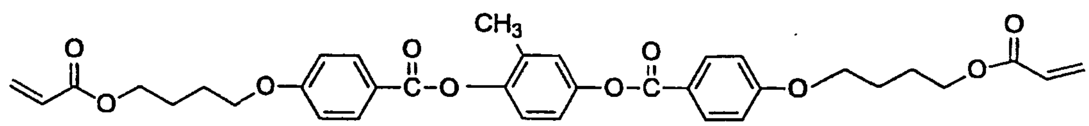

Next, discotic liquid-crystalline compounds which can be employed desirably in the present invention are described in detail. According to the present invention, discotic liquid-crystalline molecules in the layer are desirably aligned vertically relative to a layer plane, in particular with a mean tilt angle of 50 to 90 degrees. Discotic liquid-crystalline molecules have been variously described in the literatures (Mol. Crysr. Liq. Cryst., vol. 71, page 111 (1981), C. Destrade et al.; Quarterly Chemistry Survey, No. 22, The Chemistry of Liquid-crystals, Chapter 5, Chapter 10, Section 2 (1994), ed. by Japan Chem. Soc.; Angew. Chem. Soc. Chem. Comm., page 1794 (1985), B. Kohne et al.; J. Am. Chem. Soc., vol. 116, page 2,655 (1994), J. Zhang et al.). The polymerization of discotic liquid-crystalline molecules is described in JPA No. 1996-27284. It is necessary to bond a polymerizable group as a substituent to the disk-shaped core of a discotic liquid-crystalline molecule to better fix the discotic liquid-crystalline molecules by polymerization. However, when a polymerizable group is directly bonded to the disk-shaped core, it tends to be difficult to maintain alignment during the polymerization reaction. Accordingly, the discotic liquid-crystalline molecule desirably comprises a linking group between the disk-shaped core and the polymerizable group. That is, the discotic liquid-crystalline molecule is desirably the compound denoted by Formula (II) below.

Formula (II) $D(-L-P)_n$

In the Formula (II), D denotes a disk-shaped core, L denotes a divalent linking group, P denotes a polymerizable group, and n denotes an integer from 4 to 12. The examples of disk-shaped core (D) in the above formula are given below. In the various examples below, LP (or PL) denotes the combination of a divalent linking group (L) with a polymerizable group (P).

(D1)

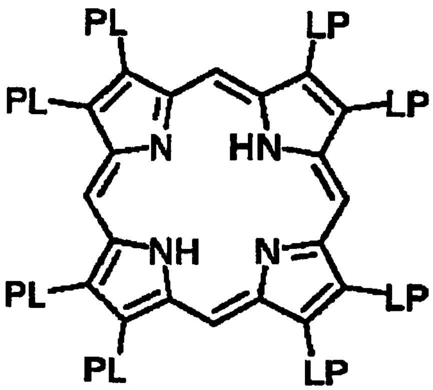

(D2)

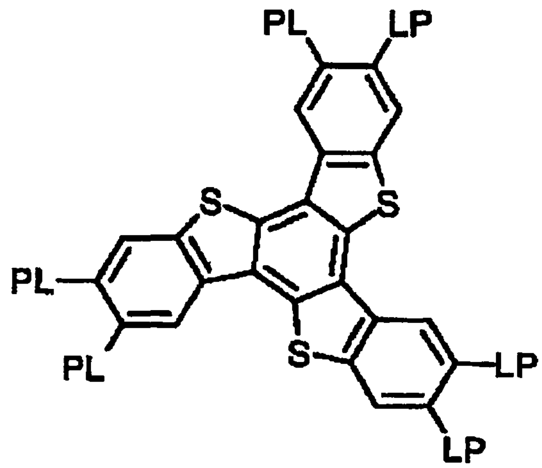

(D3)

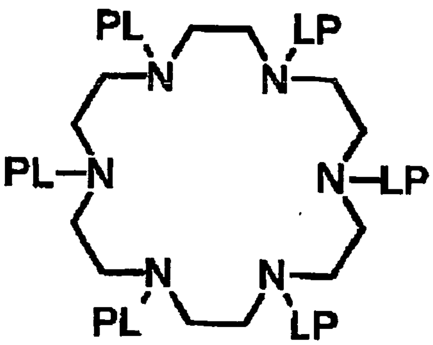

(D4)

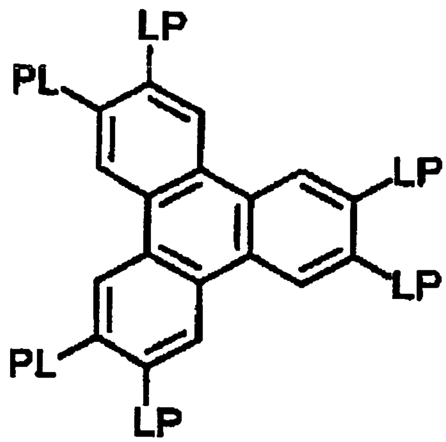

(D5)

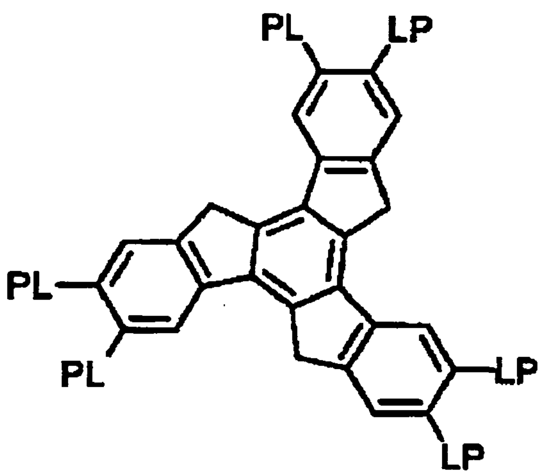

(D6)

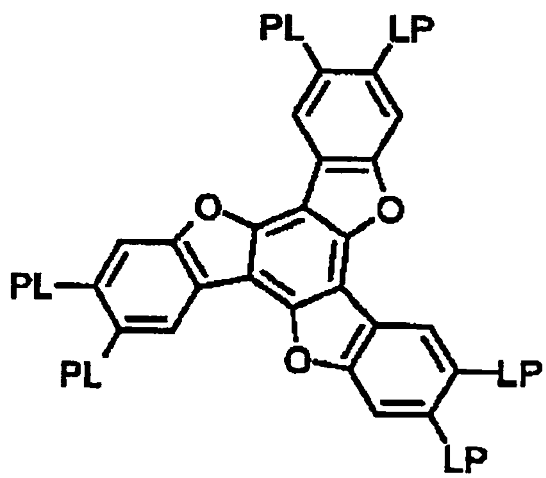

(D7)

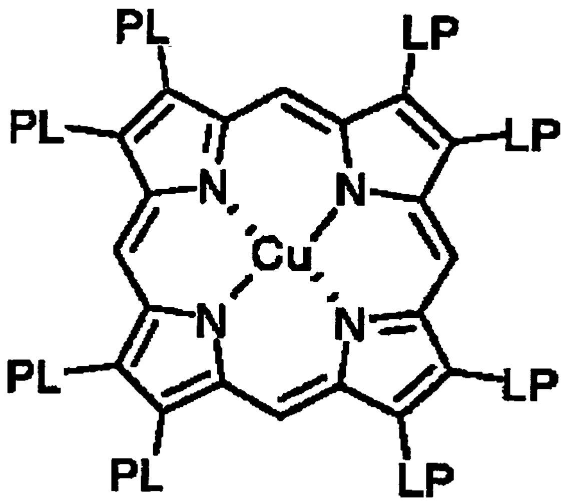

(D8)

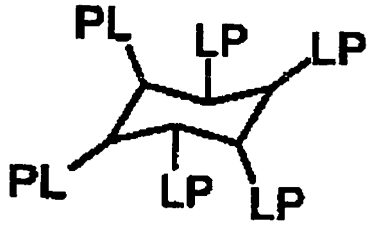

(D9)

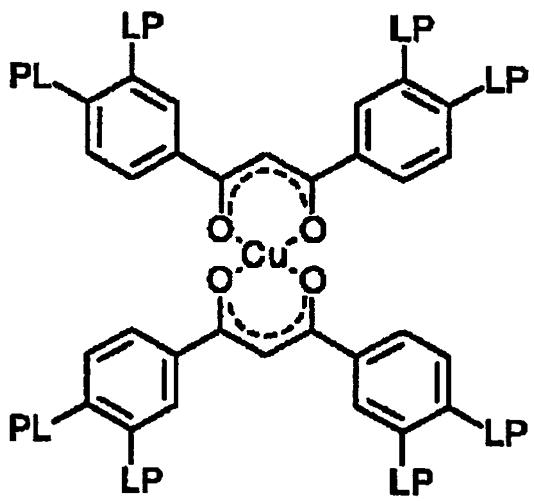

(D10)

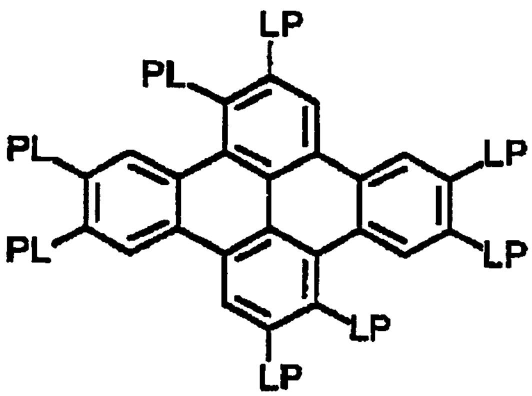

(D11)

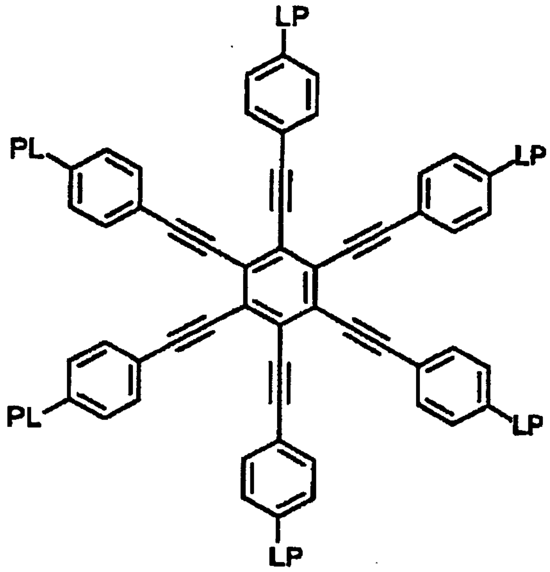

(D12)

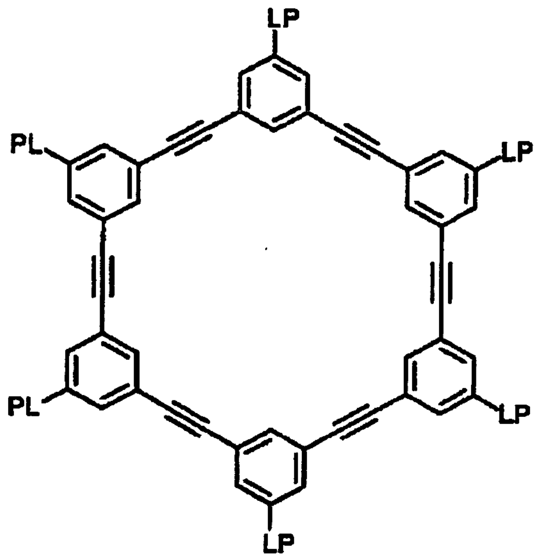

(D13)

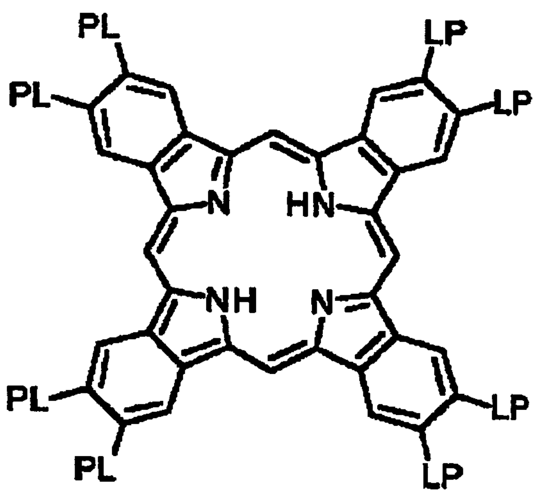

(D14)

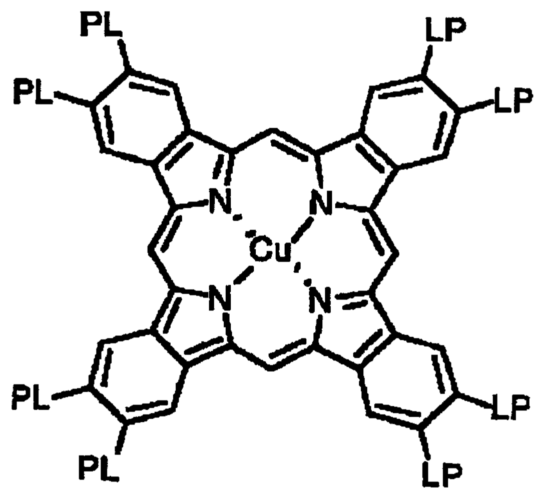

(D15)

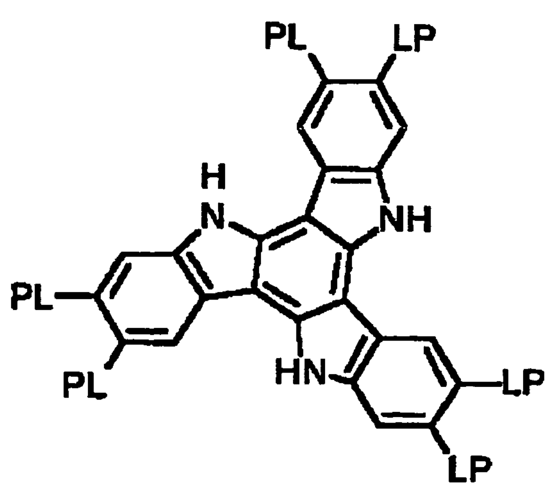

In the above Formula (II), divalent linking group (L) is desirably selected from the group consisting of an alkylene group, alkenylene group, arylene group, -CO-, -NH-, -O-, -S- and any combinations thereof. The divalent linking group (L) is preferably a group combining at least two divalent groups selected from the group consisting of an alkylene group, alkenylene group, arylene group, -CO-, -NH-, -O-, and -S-. Most preferably, the divalent linking group (L) is a group combining at least two divalent groups selected from the group consisting of an alkylene group, alkenylene group, arylene group, -CO- and -O-. The alkylene group desirably comprises from 1 to 12 carbon atoms. The alkenylene group desirably comprises form 2 to 12 carbon atoms. The arylene group desirably comprises from 6 to 10 carbon atoms. The alkylene group, alkenylene group and arylene group may have at least one substituent such as an alkyl group, halogen atom, cyano, alkoxy group or acyloxy group.

The examples of the divalent linking group (L) are shown bellow. Each of them is bonded on the left to disk-shaped core (D) and on the right to polymerizable group (P). "AL" denotes an alkylene group or alkenylene group, and "AR" denotes an arylene group.

L1:-AL-CO-O-AL-

L2:-AL-CO-O-AL-O-

L3:-AL-CO-O-AL-O-AL-

L4:-AL-CO-O-AL-O-CO-

L5:-CO-AR-O-AL-

L6:-CO-AR-O-AL-O-

L7:-CO-AR-O-AL-O-CO-

L8:-CO-NH-AL-

L9:-NH-AL-O-

L10:-NH-AL-O-CO-

L11:-O-AL-

L12:-O-AL-O-

L13:-O-AL-O-CO-

L14:-O-AL-O-CO-NH-AL-

L15:-O-AL-S-AL-

L16:-O-CO-AL-AR-O-AL-O-CO-

L17:-O-CO-AR-O-AL-CO-

L18:-O-CO-AR-O-AL-O-CO-

L19:-O-CO-AR-O-AL-O-AL-O-CO-

L20:-O-CO-AR-O-AL-O-AL-O-AL-O-CO-

L21:-S-AL-

L22:-S-AL-O-

L23:-S-AL-O-CO-

L24:-S-AL-S-AL-

L25:-S-AR-AL-

In the Formula (II), the polymerizable group (P) may be selected depending on the manner of polymerization. The examples of the polymerizable group are shown bellow.

(P1)

$-CH=CH_2$

(P2)

$-C\equiv CH$

(P3)

$-CH_2-C\equiv CH$

(P4)

$-NH_2$

(P5)

$-SO_3H$

(P6)

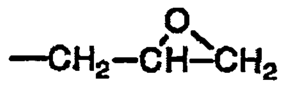

(P7)

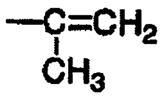

(P8)

$-CH=CH-CH_3$

(P9)

$-N=C=S$

(P10)

$-SH$

(P11)

$-CHO$

(P12)

$-OH$

(P13)

$-CO_2H$

(P14)

$-N=C=O$

(P15)

$-CH=CH-C_2H_5$

(P16)

$-CH=CH-n\text{-}C_3H_7$

(P17)

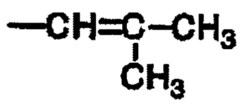

(P18)

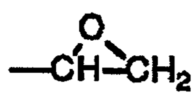

The polymerizable group (P) is desirably an unsaturated polymerizable group (P1, P2, P3, P7, P8, P15, P16 or P17) or an epoxy group (P6 or P18), preferably an unsaturated polymerizable group, and more preferably, an ethylenic unsaturated polymerizable group (P1, P7, P8, P15, P16 or P17).

In the Formula (II), n is an integer from 4 to 12. n is determined depending on the species of the discotic core (D). The plural combinations of L and P may be different or identical each other, however, are desirably identical to each other.

Two or more species of discotic liquid-crystalline compounds may be used in combination. For example, a compound having an asymmetric carbon atom in the divalent linking group and a compound having no asymmetric carbon atom in the divalent linking group may be used in combination.

The optically anisotropic layers may be prepared by applying a composition, i.e., a coating solution, comprising a rod-like or discotic liquid-crystalline compound, and if necessary additives such as a polymerization initiator described later, to a surface of an alignment layer. Any organic solvents may be used for preparing the coating solution. The examples of the organic solvents include amides (e.g., N,N-dimethyl formamide), sulfoxides (e.g., dimethyl sulfoxide), heterocyclic compounds (e.g., pyridine), hydrocarbons (e.g., benzene, hexane), alkyl halides (e.g., chloroform, dichloromethane), esters (e.g., methyl acetate, butyl acetate), ketones (e.g., acetone, methyl ethyl ketone) and ethers (e.g., tetrahydrofuran, 1,2-dimethoxyethane). Alkyl halides and ketones are desirable. Two or more organic solvents may be used in combination. The coating solution can be applied by known techniques (e.g., extrusion coating, direct gravure coating, reverse gravure coating, die coating).

The liquid-crystalline molecules in the layers are fixed in an alignment, preferably fixed by the polymerization

reaction of the polymerizable groups (P) or (Q) included in the liquid-crystalline molecules. The polymerization reaction may be carried out in a manner of a thermal polymerization reaction with a thermal polymerization initiator or in a manner of a photo-polymerization reaction with a photo-polymerization initiator. Photo-polymerization reaction is preferred. The examples of photo-polymerization initiators include alpha -carbonyl compounds (described in US Patents Nos. 2, 367, 661 and 2,367,670), acyloin ethers (described in US Patent No. 2,448,828), alpha-hydrocarbon-substituted aromatic acyloin compounds (described in US Patent No. 2,722,512), polynuclear quinone compounds (described in US Patents Nos. 3,046,127 and 2,951,758), combinations of triarylimidazole dimers and p-aminophenyl ketone (described in US Patent No. 3,549,367), acridine and phenazine compounds (described in JPA No. 1985-105667 and US Patent No. 4,239,850) and oxadiazole compounds (described in US Patent No. 4,212,970).

The amount of the photo-polymerization initiators to be used is preferably 0.01 to 20 % by weight, more preferably 0.5 to 5 % by weight on the basis of solids in the coating solution. Irradiation for polymerizing the liquid-crystalline molecules preferably uses UV rays. The irradiation energy is preferably 20 $mJ/cm^2$ to 50 $J/cm^2$, and more preferably 100 to 800 $mJ/cm^2$. Irradiation may be performed under heating to accelerate the photo-polymerization reaction.

The thicknesses of the optically anisotropic layers are preferably in the range of 0.1 to 10 micro meters, more preferably in the range of 0.5 to 5 micro meters.

[Third Optically Negative Anisotropic Layer]

The retarder and elliptically polarizing plate of the present invention comprise an optically negative anisotropic layer, namely third optically anisotropic layer. The third layer may be mono-layered or plural-layered in order to satisfy the above formula (1). The third layer may be formed of an optically anisotropic polymer film or a composition comprising a liquid-crystalline compound. The examples of polymer materials for such polymer films include triacetyl celluloses, polyimides, modified polycarbonates and other various polymers which can be oriented in the same manner as the above polymers when they exhibit an optically negative anisotropy. Among them, a film formed of triacetyl cellulose is desirable. The optically negative anisotropic polymer film having a desired Rth, may be prepared by stretching diaxially.

Discotic or cholesteric liquid-crystalline compounds are desirably used in the third optically anisotropic layer.

The optically negative anisotropy can be generated by discotic liquid-crystalline molecules substantially aligned in a homeotropic alignment. It is to be noted now that the term of "homeotropic alignment" is used for any alignments having a mean tilt angle, which is a mean angle between the optical axis of the discotic molecule and normal direction relative to the layer plane, of 0 to $\pm 40$ degrees. In the case of that the discotic molecules are tilt aligned or hybrid aligned in the third optically anisotropic layer, the mean tilt angle is desirably in the range of 0 to $\pm 40$ degrees again. The third layer may be formed of a twisted alignment generated by addition of a chiral agent or by application of shear stress.

The optically negative anisotropy can be generated by cholesteric liquid-crystalline molecules aligned in a helical twisted alignment. Thus, the desired optical property may be obtained by aligning cholesteric molecules in a helical twisted alignment and adjusting various parameters, affecting on the optical property, such as a twisted angle or retardation.

In the third optically anisotropic layer, the liquid-crystalline molecules are desirably fixed in an alignment state, and more desirably fixed by polymerization reaction. The examples of polymerization processes and polymerizable liquid-crystalline compounds which can be used for preparing the third optically anisotropic layer are identical to those for preparing the first and second optically anisotropic layers.

[Alignment Layer]

When the first, second and third optically anisotropic layers are formed of liquid-crystalline materials, alignment layers may be used for aligning liquid-crystalline molecules. In the case where the first, second and third layers are sequentially prepared on a substrate, each of the three layers may be formed on an alignment layer for controlling orientation of liquid-crystalline molecules in each layers, to thereby generate a desired optical property. In the case, the substrate and the three layers are disposed in order of a substrate/an alignment layer/a first optically anisotropic layer/an alignment layer/a second optically anisotropic layer/an alignment layer/a third optically anisotropic layer; or a substrate/an alignment layer/a third optically anisotropic layer/an alignment layer/a second optically anisotropic layer/an alignment layer/a first optically anisotropic layer.

The materials for alignment layers may be properly selected in consideration of various factors such as desired optical properties or species of liquid-crystalline compounds. In the case where the lower optically anisotropic layer contains a component contributing to improvement of alignment-layer-function, it is possible to align liquid-crystalline molecules in a desired alignment on a surface of the lower layer and prepare the upper optically anisotropic layer without an alignment layer.

There have been provided alignment layers formed of various materials by various methods such as subjecting

a film made of an organic compound (preferably a polymer) to a rubbing treatment, obliquely depositing an inorganic compound, forming a layer having microgrooves, or accumulating an organic compound (e.g., ω-trichosanic acid, dioctadecylmethylammonium chloride, methyl stearate) by Langmuir-Blodgett method (LB film). Alignment layers having an alignment effect under an electric or magnetic field or irradiation are also known. According to the present invention, the alignment layer prepared by subjecting a film of a polymer to a rubbing treatment is desirable as an alignment layer. The rubbing treatment is performed by rubbing the surface of the polymer layer in a direction several times with a paper or a cloth.

The polymer materials for alignment layers may be properly selected in consideration of the desired alignments, especially mean tilt angles, of liquid-crystalline molecules. In order to align the liquid-crystalline molecules with a low tilt angle, in particular at a mean tilt angle of 0 to 50 degrees, a polymer used in preparing an alignment layer is desirably selected so as not to lower the surface energy of the alignment layer. In order to align the liquid-crystalline molecules vertically, in particular at a mean tilt angle more than 50 degrees, a polymer used in preparing an alignment layer is desirably selected so as to lower the surface energy of the alignment layer. The polymers which can lower the surface energy of the alignment layer desirably have C10-100 hydrocarbon groups in side chains.

The thickness of the alignment layer is preferably in the range of 0.01 to 5 micro meters, and more preferably 0.05 to 1 micro meters.

It is also allowable that alignment layers are formed on temporary substrates, and the optically anisotropic layers are formed respectively on them and then transferred onto a substrate such as a plastic film. The liquid-crystalline molecules can maintain an alignment without any alignment layers after being fixed in an alignment state.

An alignment layer or rubbed surface is seldom required for aligning the liquid-crystalline molecules, when the mean tilt angel thereof is less than 5 degrees. In such a case, an alignment layers, described in JPA No. 1997-152509, which is capable of bonding liquid-crystalline molecules at the interface, may be utilized for improvement in adhesion between the alignment layer and the substrate. The surface of the alignment layer doesn't need to be applied rubbing treatment where the alignment layer is used for only improvement in such adhesion.

For aligning rod-like liquid-crystalline molecules so that the optic axes of the rod-like molecules in the layer are oriented at an angle not smaller than 45 degrees relative to the longitudinal direction of the substrate, an alignment layer capable of aligning the rod-like liquid-crystalline molecules in a direction such that their optic axes are aligned in an orthogonal direction to the rubbing direction (hereinafter such an alignment layer is referred to as "an orthogonal alignment layer") is desirably used.

Various orthogonal alignment layers are described in JPA No. 2002-062427 and JPA No. 2002-268068. In particular, an orthogonal alignment layer formed of a polymer having either a repeating unit of Formula (III) or Formula (IV) and a repeating unit of Formula (V) is desirably used.

(III)

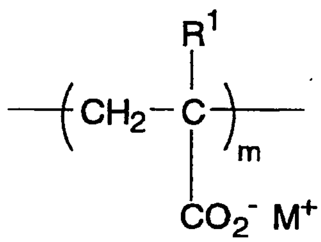

(IV)

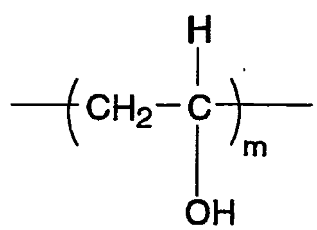

(V)

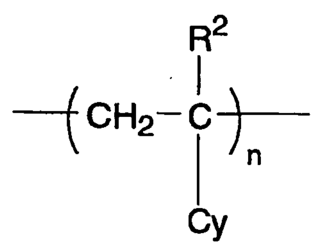

In the formulae, $R^1$ is hydrogen or methyl, $R^2$ is hydrogen, halogen or C1-6 alkyl group; M is proton, alkali metal ion or ammonium ion; Cy is an aliphatic cyclic group, aryl group or heterocyclic group; m ranges from 10 to 95 mol %, and n ranges from 90 to 5 mol %.

The formulae (III) and (V) are described bellow in detail.

In the Formula (III), $R^1$ is hydrogen (when the polymer is an acrylic copolymer) or methyl (when the polymer is a methacrylic copolymer).

In the Formula (III), M is proton, alkali metal ion (e.g., $Li^+$, $Na^+$, $K^+$) or ammonium ion. The ammonium ion may be substituted with organic group such as methyl or ethyl.

In the Formula (V), $R^2$ is a hydrogen atom, halogen atom or C1-6 alkyl group. $R^2$ is desirably a hydrogen atom or C1-6 alkyl group; preferably a hydrogen atom, methyl or ethyl; and more preferably a hydrogen atom or methyl.

In the Formula (V), Cy is an aliphatic cyclic group, aryl group or heterocyclic group.

The aliphatic ring included in the aliphatic cyclic group is desirably five-, six- or seven-membered, preferably five- or six-membered, and more preferably six-membered. The examples of the aliphatic ring include a cyclohexane

ring, cyclohexene ring and bicyclo[2.2.1]hepta-2-en ring. The aliphatic rings may be condensed with other aliphatic rings, aryl rings or hetero rings.

The examples of the aryl ring included in the aryl group include benzene ring, naphthalene ring, anthracene ring, phenanthrene ring, pyrane ring and tetracene (naphthacene) ring. The aryl rings may be condensed with aliphatic rings or hetero rings.

The hetero ring included in the heterocyclic group is desirably five-, six- or seven-membered, preferably five- or six-membered, and more preferably six-membered. Aromatic hetero rings are desirable. Aromatic hetero rings are usually unsaturated and desirably have maximum double bondings. The examples of the hetero rings include a furan ring, thiophene ring, pyrrole ring, oxazole ring, isoxazole ring, isothiazole ring, imidazole ring, pyrazole ring, furazan ring, pyrane ring, pyridine ring, pyridazine ring, pyrimidine ring and pyrazine ring. The hetero rings may be condensed with other hetero rings, aliphatic rings or aryl rings.

The aliphatic cyclic group, aryl group and the heterocyclic group may have at least one substituent. The examples of the substituent include alkyl group (e.g., methyl, ethyl, t-butyl), substituted alkyl group (e.g., chloromethyl, hydroxymethyl, trimethylammonium chloride), alkoxy group (e.g., methoxy), halogen atom (e.g., F, C1, Br), carboxy, acyl group (e.g., formyl), amino, sulfo, aryl group (e.g., phenyl), aryloxy group (e.g., phenoxy) and oxo.

In the Formula (V), n ranges from 5 to 90 mol %.

The examples of repeating units represented by the Formula (V) are shown bellow.

(V-1)

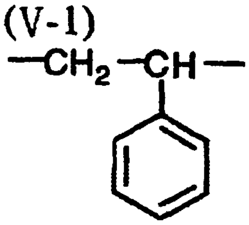

(V-2)

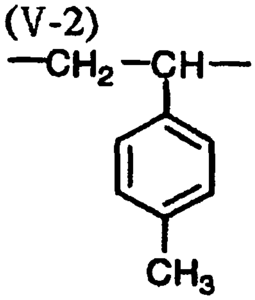

(V-3)

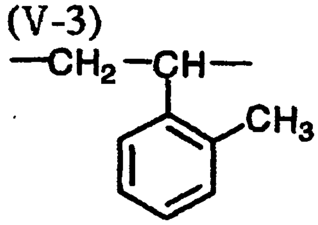

(V-4)

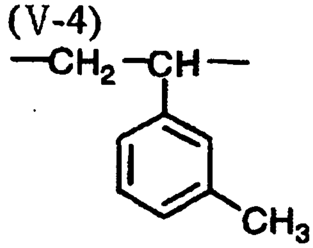

(V-5)

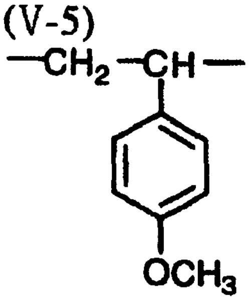

(V-6)

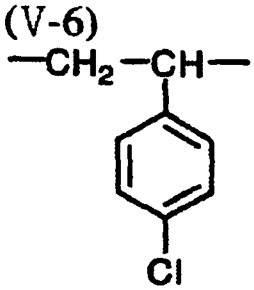

(V-7)

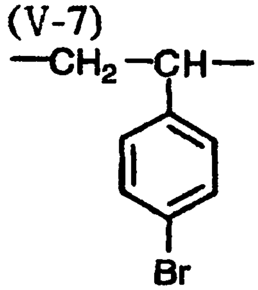

(V-8)

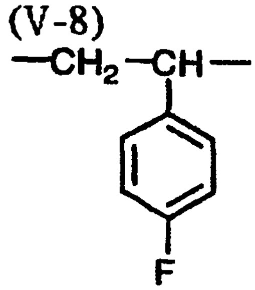

(V-9)

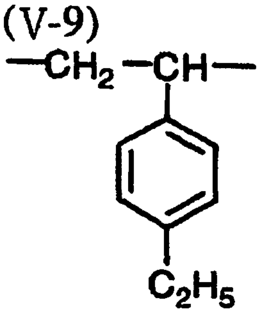

(V-10)

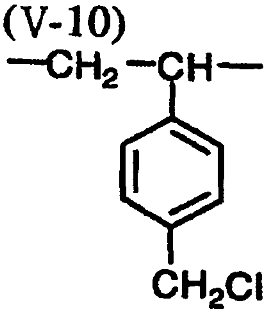

(V-11)

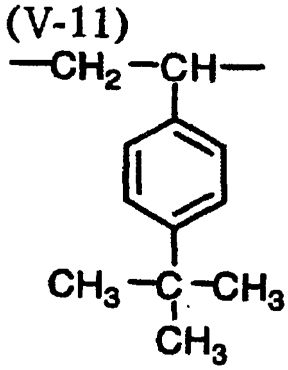

(V-12)

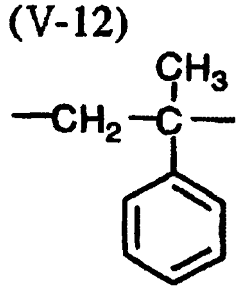

(V-13)

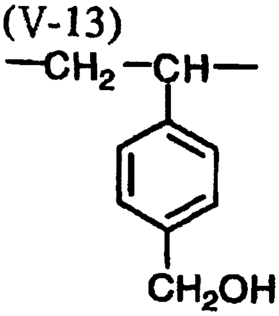

(V-14)

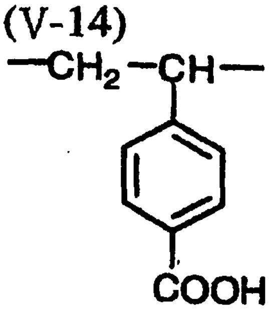

(V-15)

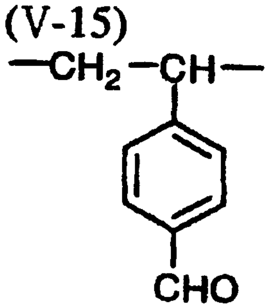

(V-16)

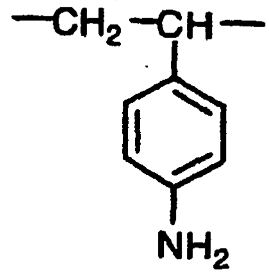

(V-17)

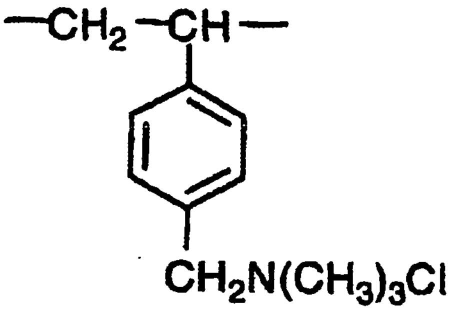

(V-18)

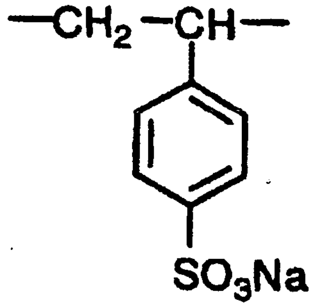

(V-19)

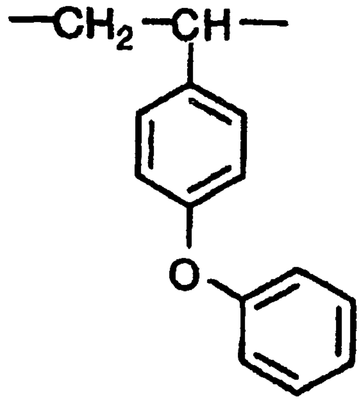

(V-20)

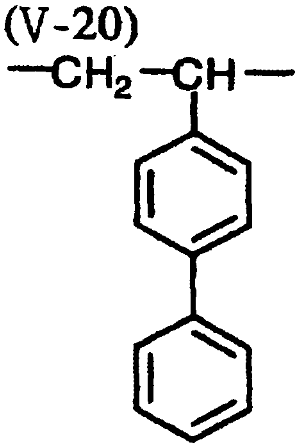

(V-21)

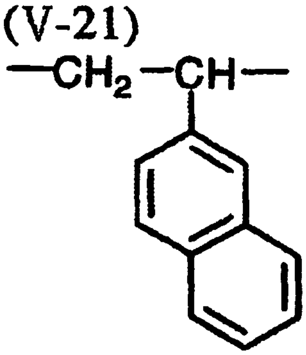

(V-22)

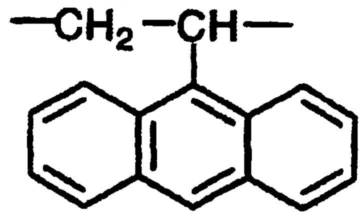

(V-23)

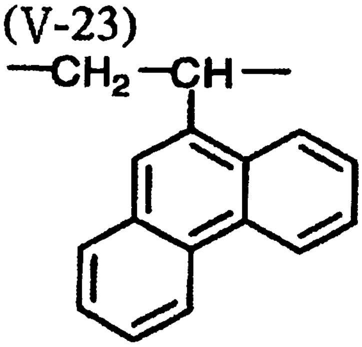

(V-24)

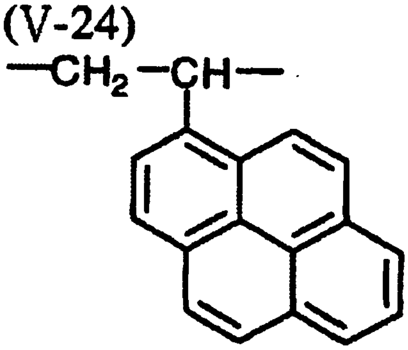

(V-25)

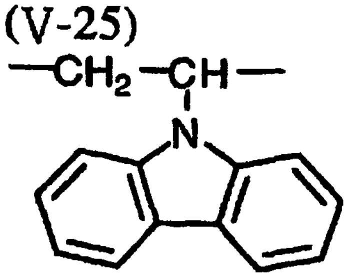

(V-26)

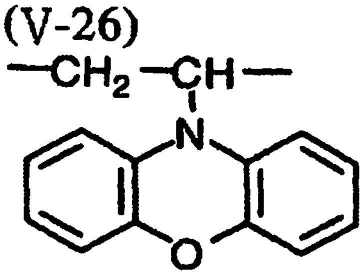

(V-27)

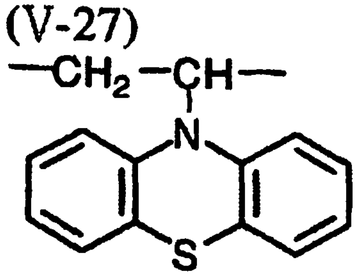

(V-28)

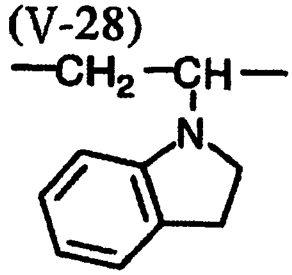

(V-29)

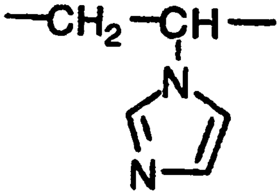

(V-30)

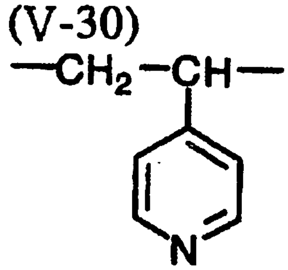

(V-31)

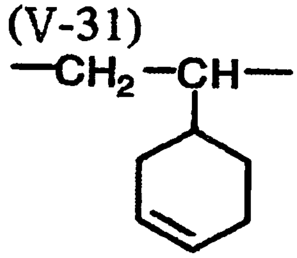

(V-32)

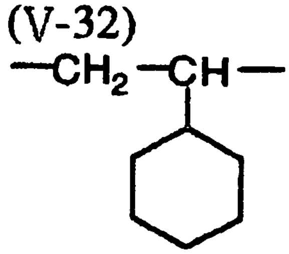

(V-33)

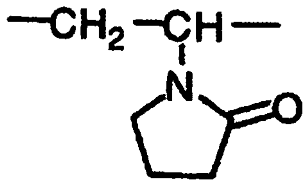

(V-34)

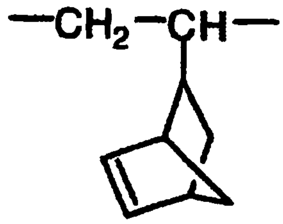

(V-35)

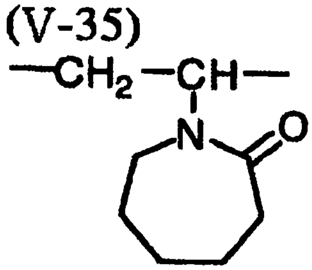

The desired examples of the acrylic copolymers and methacrylic copolymers are shown bellow. In the following examples, "AA" denotes a repeating unit derived from acrylic acid, "MA" denotes a repeating unit derived from methacrylic acid. The ration of each repeating unit is shown by mol%.

PA101: $-(AA)_{70}-(V\text{-}1)_{30}-$
PA102: $-(AA)_{60}-(V\text{-}1)_{40}-$
PA103: $-(AA)_{50}-(V\text{-}1)_{50}-$
PA104: $-(AA)_{40}-(V\text{-}1)_{60}-$
PA105: $-(AA)_{60}-(V\text{-}2)_{40}-$
PA106: $-(AA)_{60}-(V\text{-}3)_{40}-$
PA107: $-(AA)_{60}-(V\text{-}4)_{40}-$
PA108: $-(AA)_{60}-(V\text{-}5)_{40}-$
PA109: $-(AA)_{40}-(V\text{-}6)_{40}-$
PA110: $-(AA)_{50}-(V\text{-}7)_{50}-$
PA111: $-(AA)_{70}-(V\text{-}8)_{30}-$
PA112: $-(AA)_{60}-(V\text{-}9)_{40}-$
PA113: $-(AA)_{60}-(V\text{-}10)_{40}-$
PA114: $-(AA)_{60}-(V\text{-}11)_{40}-$
PA115: $-(AA)_{50}-(V\text{-}12)_{50}-$
PA116: $-(AA)_{50}-(V\text{-}13)_{50}-$
PA117: $-(AA)_{70}-(V\text{-}14)_{30}-$
PA118: $-(AA)_{50}-(V\text{-}15)_{50}-$
PA119: $-(AA)_{60}-(V\text{-}16)_{40}-$
PA120: $-(AA)_{60}-(V\text{-}17)_{40}-$
PA121: $-(AA)_{60}-(V\text{-}18)_{40}-$
PA122: $-(AA)_{60}-(V\text{-}19)_{40}-$

PA123: $-(AA)_{75}-(V-20)_{25}-$
PA124: $-(AA)_{60}-(V-20)_{40}-$
PA125: $-(AA)_{70}-(V-21)_{30}-$
PA126: $-(AA)_{80}-(V-22)_{20}-$
PA127: $-(AA)_{70}-(V-22)_{30}-$
PA128: $-(AA)_{60}-(V-22)_{40}-$
PA129:$-(AA)_{70}-(V-23)_{30}-$
PA130: $-(AA)_{70}-(V-24)_{30}-$
PA131: $-(AA)_{80}-(V-25)_{20}-$
PA132: $-(AA)_{70}-(V-25)_{30}-$
PA133: $-(AA)_{60}-(V-25)_{40}-$
PA134: $-(AA)_{60}-(V-26)_{40}-$
PA135: $-(AA)_{70}-(V-27)_{30}-$
PA136: $-(AA)_{80}-(V-28)_{20}-$
PA137: $-(AA)_{70}-(V-29)_{30}-$
PA138: $-(AA)_{60}-(V-30)_{40}-$
PA139: $-(AA)_{70}-(V-31)_{30}-$
PA140: $-(AA)_{70}-(V-32)_{30}-$
PA141: $-(AA)_{60}-(V-33)_{40}-$
PA142: $-(AA)_{70}-(V-34)_{30}-$
PA143: $-(AA)_{70}-(V-35)_{30}-$
PA201: $-(MA)_{70}-(V-1)_{30}-$
PA202: $-(MA)_{60}-(V-1)_{40}-$
PA203: $-(MA)_{50}-(V-1)_{50}-$
PA204: $-(MA)_{40}-(V-1)_{60}-$
PA205: $-(MA)_{60}-(V-2)_{40}-$
PA206: $-(MA)_{60}-(V-3)_{40}-$
PA207: $- (MA)_{60}-(V-4)_{40}-$
PA208: $- (MA)_{60}- V-5)\ _{40}-$
PA209: $- (MA)_{40}-(V-6)_{40}-$
PA210: $-(MA)_{50}-(V-7)_{50}-$
PA211: $-(MA)_{70}-(V-8)_{30}-$
PA212: $-(MA)_{60}-(V-9)_{40}-$
PA213: $-(MA)_{60}-(V-10)_{40}-$
PA214: $-(MA)_{60}-(V-11)_{40}-$
PA215: $-(MA)_{50}-(V-12)_{50}-$
PA216: $-(MA)_{50}-(V-13)_{50}-$
PA217: $-(MA)_{70}-(V-14)_{30}-$
PA218: $-(MA)_{50}-(V-15)_{50}-$
PA219: $-(MA)_{60}-(V-16)_{40}-$
PA220: $-(MA)_{60}-(V-17)_{40}-$
PA221: $-(MA)_{60}-(V-18)_{40}-$
PA222: $-(MA)_{60}-(V-19)_{40}-$
PA223: $-(MA)_{75}-(V-20)_{25}-$
PA224: $-(MA)_{60}-(V-20)_{40}-$
PA225: $-(MA)_{70}-(V-21)_{30}-$
PA226: $-(MA)_{80}-(V-22)_{20}-$
PA227: $-(MA)_{70}-(V-22)_{30}-$
PA228: $-(MA)_{60}-(V-22)_{40}-$
PA229: $-(MA)_{70}-(V-23)_{30}-$
PA230: $-(MA)_{70}-(V-24)_{30}-$
PA231: $-(MA)_{80}-(V-25)_{20}-$
PA232: $-(MA)_{70}-(V-25)_{30}-$
PA233: $-(MA)_{60}-(V-25)_{40}-$
PA234: $-(MA)_{60}-(V-26)_{40}-$
PA235: $-(MA)_{70}-(V-27)_{30}-$
PA236: $-(MA)_{80}-(V-28)_{20}-$
PA237: $-(MA)_{70}-(V-29)_{30}-$

PA238: $-(MA)_{60}-(V\text{-}30)_{40}-$
PA239: $-(MA)_{70}-(V\text{-}31)_{30}-$
PA240: $-(MA)_{70}-(V\text{-}32)_{30}-$
PA241: $-(MA)_{60}-(V\text{-}33)_{40}-$
PA242: $-(MA)_{70}-(V\text{-}34)_{30}-$
PA243: $-(MA)_{70}-(V\text{-}35)_{30}-$

The polymers comprising a repeating unit represented by the Formula (IV) belong to modified polyvinyl alcohols. It is not necessary that all of the polyvinyl alcohol moieties included in the modified polyvinyl alcohol are saponified. That is, the modified polyvinyl alcohol may have a repeating unit represented by Formula (VI).

(VI)

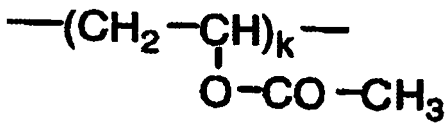

In the Formula (VI), k ranges from 0.01 to 20 mol%.

The preferred examples of the modified polyvinyl alcohols are shown bellow. In the specific examples, "(IV)" denotes a vinyl alcohol based repeating unit represented by the Formula (IV) and "(VI)" denotes a vinyl acetate based repeating unit represented by the Formula (VI). The ratio of each repeating unit is shown by mol%.

VA101: $-(IV)_{58}-(V\text{-}1)_{30}-(VI)_{12}-$
VA102: $-(IV)_{48}-(V\text{-}1)_{40}-(VI)_{12}-$
VA103: $-(IV)_{38}-(V\text{-}1)_{50}-(VI)_{12}-$
VA104: $-(IV)_{28}-(V\text{-}1)_{60}-(VI)_{12}-$
VA105: $-(IV)_{48}-(V\text{-}2)_{40}-(VI)_{12}-$
VA106: $-(IV)_{48}-(V\text{-}3)_{40}-(VI)_{12}-$
VA107: $-(IV)_{48}-(V\text{-}4)_{40}-(VI)_{12}-$
VA108: $-(IV)_{48}-(V\text{-}5)_{40}-(VI)_{12}-$
VA109: $-(IV)_{28}-(V\text{-}6)_{40}-(VI)_{12}-$
VA110: $-(IV)_{38}-(V\text{-}7)_{50}-(VI)_{12}-$
VA111: $-(IV)_{58}-(V\text{-}8)_{30}-(VI)_{12}-$
VA112: $-(IV)_{48}-(V\text{-}9)_{40}-(VI)_{12}-$
VA113: $-(IV)_{48}-(V\text{-}10)_{40}-(VI)_{12}-$
VA114: $-(IV)_{48}-(V\text{-}11)_{40}-(VI)_{12}-$
VA115: $-(IV)_{38}-(V\text{-}12)_{50}-(VI)_{12}-$
VA116: $-(IV)_{38}-(V\text{-}13)_{50}-(VI)_{12}-$
VA117: $-(IV)_{58}-(V\text{-}14)_{30}-(VI)_{12}-$
VA118: $-(IV)_{38}-(V\text{-}15)_{50}-(VI)_{2}-$
VA119: $-(IV)_{48}-(V\text{-}16)_{40}-(VI)_{12}-$
VA120: $-(IV)_{48}-(V\text{-}17)_{40}-(VI)_{12}-$
VA121: $-(IV)_{48}-(V\text{-}18)_{40}-(VI)_{12}-$
VA122: $-(IV)_{48}-(V\text{-}19)_{40}-(VI)_{12}-$
VA123: $-(IV)_{63}-(V\text{-}20)_{25}-(VI)_{12}-$
VA124: $-(IV)_{48}-(V\text{-}20)_{40}-(VI)_{12}-$
VA125: $-(IV)_{58}-(V\text{-}21)_{30}-(VI)_{12}-$
VA126: $-(IV)_{68}-(V\text{-}22)_{20}-(VI)_{12}-$
VA127: $-(IV)_{58}-(V\text{-}22)_{30}-(VI)_{12}-$
VA128: $-(IV)_{48}-(V\text{-}22)_{40}-(VI)_{12}-$
VA129: $-(IV)_{58}-(V\text{-}23)_{30}-(VI)_{12}-$
VA130: $-(IV)_{58}-(V\text{-}24)_{30}-(VI)_{12}-$
VA131: $-(IV)_{68}-(V\text{-}25)_{20}-(VI)_{12}-$
VA132: $-(IV)_{58}-(V\text{-}25)_{30}-(VI)_{12}-$
VA133: $-(IV)_{48}-(V\text{-}25)_{40}-(VI)_{12}-$
VA134: $-(IV)_{48}-(V\text{-}26)_{40}-(VI)_{12}-$

VA135: $-(IV)_{58}-(V\text{-}27)_{30}-(VI)_{12}-$
VA136: $-(IV)_{68}-(V\text{-}28)_{20}-(VI)_{12}-$
VA137: $-(IV)_{58}-(V\text{-}29)_{30}-(VI)_{12}-$
VA138: $-(IV)_{48}-(V\text{-}30)_{40}-(VI)_{12}-$
VA139: $-(IV)_{58}-(V\text{-}31)_{30}-(VI)_{12}-$
VA140: $-(IV)_{58}-(V\text{-}32)_{30}-(VI)_{12}-$
VA141: $-(IV)_{48}-(V\text{-}33)_{40}-(VI)_{12}-$
VA142: $-(IV)_{58}-(V\text{-}34)_{30}-(VI)_{12}-$
VA143: $-(IV)_{58}-(V\text{-}35)_{30}-(VI)_{12}-$

[Vertical Alignment Layer]

For aligning discotic liquid-crystalline molecules vertically, it is important to lower surface energy of an alignment layer. In particular, for aligning discotic liquid-crystalline molecules vertically, it is necessary to use an alignment layer formed of a polymer having functional groups capable of lowering surface energy of the alignment layer. Hydrocarbon groups of 10 or more carbon atoms are effective in lowering the surface energy. The hydrocarbon groups introduced into the side chains of a polymer are more localized on the surface of a layer formed of the polymer than those introduced into the main chain of the polymer. The term of "hydrocarbon group" is used for any aliphatic groups, aryl groups and any combinations thereof. The aliphatic group may have a straight chain, branched chain or cyclic structure. The desired examples of the aliphatic group include alkyl group (including cycloalkyl group) and alkenyl group (including cycloalkenyl group). The hydrocarbon group may have a substituent, which is not so much hydrophilic, such as halogen atoms. The number of the carbon atoms included in the hydrocarbon group is desirably from 10 to 100, preferably from 10 to 60, and more preferably from 10 to 40. The main chain of the polymer desirably has a polyimide based or polyvinyl alcohol based structure.

Polyimide is usually prepared by condensation reaction of a tetra-carboxylic acids and a diamine. Copolymer type polyimide may be prepared by condensation reaction of two or more species of tetra-carboxylic acids and two or more species of diamines. The above-mentioned hydrocarbon group may be included in either of the repeating units based on the tetra-carboxylic acids or diamines, or both of them. Among polyimides having the hydrocarbon groups, polyimides having steroid moieties in the side chains or the main chain are preferred. The steroid moiety is corresponding to a hydrocarbon group of 10 or more carbon atoms and the steroid moieties in the side chains contribute to aligning discotic liquid-crystalline molecules vertically. In the present *specification,* the term of "steroid moiety" is used for any cyclopentanohydrophenanthrene ring structures and any ring structures based on the cyclopentanohydrophenanthrene ring in which at least one single bond is replaced by a double bond provided that the double-bond-replaced ring doesn't belong to an aryl ring group.

The modified polyvinyl alcohols having hydrocarbon group of 10 or more carbon atoms are desirably used for preparing a vertical alignment layer. The term of "hydrocarbon group" is used for aliphatic groups, aryl groups and any combinations thereof. The aliphatic group may have a straight chain, branched chain or cyclic structure. The desired examples of the aliphatic group include alkyl group (including cycloalkyl group) and alkenyl group (including cycloalkenyl group). The hydrocarbon group may have a substituent, which is not so much hydrophilic, such as halogen atoms. The number of the carbon atoms included in the hydrocarbon group is desirably from 10 to 100, preferably from 10 to 60, and more preferably from 10 to 40. The ratio of a repeating unit having the hydrocarbon group of 10 or more carbon atoms in the modified polyvinyl alcohol is desirably from 2 to 80 mol%, and preferably from 3 to 70 mol%.

The modified polyvinyl alcohol having the hydrocarbon group of 10 or more carbon atoms denoted by Formula (PV) are preferred.

Formula (PV) $-(VAl)_x-(HyC)_y-(VAc)_z-$

In the Formula (PV), Val denotes a vinyl alcohol based repeating unit, HyC is a repeating unit having a hydrocarbon group of 10 or more carbon atoms, VAc is a vinyl acetate based repeating unit, x ranges from 20 to 95 mol% (desirably from 25 to 90 mol%), y ranges from 2 to 80 mol% (desirably from 3 to 70 mol%) and z ranges from 0 to 30 mol% (desirably from 2 to 20 mol%) .

Among the repeating units of HyC having a hydrocarbon group of 10 or more carbon atoms, repeating units denoted by Formula (HyC-I) or (HyC-II) are preferred.

(HyC-I)

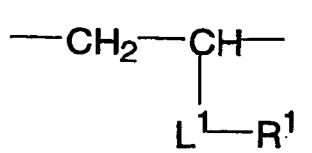

(HyC-II)

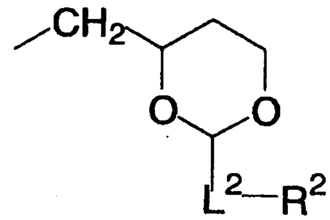

In the formulae, $L^1$ is a divalent linking group selected from the group consisting of -O-, -CO-, $-SO_2-$, -NH-, an alkylene group, an arylene group and any combinations thereof; $L^2$ is a single bond or divalent linking group selected from the group consisting of -O-, -CO-, $-SO_2-$, -NH-, an alkylene group, an arylene group and any combinations thereof; $R^1$ and $R^2$ respectively denote a hydrocarbon group of 10 or more carbon atoms. The examples of the divalent linking group formed of the combinations are shown bellow.

L1:-O-CO-
L2:-O-CO-{alkylene}-O-
L3:-O-CO-{alkylene}-CO-NH-
L4:-O-CO-{alkylene}-NH-$SO_2$-{arylene}-O-
L5:-{arylene}-NH-CO-
L6:-{arylene}-CO-O-
L7:-{arylene}-CO-NH-
L8:-{arylene}-O-
L9:-O-CO-NH-{arylene}-NH-CO-

The polymerization degree of the polymer used in preparation of the vertical alignment layer is desirably from 200 to 5,000, and preferably from 300 to 3,000. The molecular weight of the polymer is desirably from 9,000 to 200,000, and preferably from 13, 000 to 130, 000. The vertical alignment layer may be formed of two or more species of polymers. For preparing the vertical alignment layer, a rubbing treatment is desirably performed. The rubbing treatment can be performed by rubbing the surface of the polymer layer in a direction several times with a paper or a cloth. The vertical alignment layer may be formed on a temporary substrate and the lower layer may be formed by aligning discotic liquid-crystalline molecules on the alignment layer and then transferred onto the transparent substrate such as plastic films. The discotic liquid-crystalline molecules fixed in an alignment can remain the alignment without an alignment layer.

Not only in the case of the homeotropic alignment layer but also in the case of any other alignment layers, the optically anisotropic layer, in which liquid-crystalline molecules are fixed in an alignment state, on the alignment layer can be transferred to other substrate. Thus, the retarder of the present invention can be prepared not only by forming the three optically anisotropic layers on a substrate sequentially but also by forming three optically anisotropic layers respectively on temporary substrates, and sticking them each other if necessary, with a adhesive agent.

For improving adhesion between the liquid-crystalline compound and the transparent substrate, the polymer used in the alignment layer desirably has a polymerizable group. The polymerizable group may be introduced to the polymer as a portion in the side chains of a repeating unit constituting the polymer or as a cyclic substituent group of the polymer.

[Substrate]

The retarder and the elliptically polarizing plate of the present invention may comprise a substrate supporting the tree optically anisotropic layers. The substrate is transparent desirably. In particular, the substrate preferably has a transmittance of 80 % or more. The substrate with low wave length dispersion is used desirably. In particular, the substrate has a Re400/Re700 ratio of less than 1.2 desirably. The substrate has a small optical anisotropy desirably. In particular, the substrate desirably has an in-plane retardation (Re) of 20 nm or less, and more preferably 10 nm or less. The long substrate has the form of a roll or a rectangular sheet. Preferably, the optically anisotropic layers are laminated on a substrate in the form of a roll, and then the laminated roll is cut into a desired size.

Materials for the substrate include, but not specifically limited to, glass plates or polymer films, among which polymer films are preferred to obtain light-weight thin-layer products. Examples of polymers include cellulose esters, polycarbonates, polysulfones, polyether sulfones, polyacrylates, polymethacrylates and polycycloolefins. Films formed of cellulose esters are desirable, a film formed of acetyl cellulose is more desirable and a film formed of triacetyl cellulose

is much more desirable. The examples of the polycycloolefins include polymers obtained by ring-opening polymerization of tetracyclododecenes described in JPB No. 1990-9619 (the term "JPB" as used herein means an "examined published Japanese patent application") or polymers obtained by hydrogenation of the tetracyclododecens-norbornenes ring-opening polymers, which are commercially available as ARTON series manufactured by JSR Corporation and ZEONEX series and ZEONOR series manufactured by ZEON CORPORATION.

The polymer films are preferably formed by solvent casting. The thickness of the substrate is desirably in the range of 10 to 500 micro meters, and more desirably 50 to 200 micro meters. The transparent substrate may be subjected to a surface treatment (e.g., glow discharge treatment, corona discharge treatment, UV treatment, flame treatment) to improve adhesion between the transparent substrate and the overlying layer (an adhesive layer, orthogonal alignment layer or optically anisotropic layer). The substrate may contain a UV-absorption agent. An adhesive layer (undercoat layer), described in JPA No. 1995-333433, may be provided on the transparent substrate. The thickness of the adhesive layer is desirably in the range of 0.1 to 2 micro meters, and more desirably 0.2 to 1 micro meters.

[Preparation of Optically Anisotropic Layers]

The embodiment of the retarder comprising a first, second and third optically anisotropic layers formed of liquid-crystalline molecules respectively may be prepared by forming the three optically anisotropic layers on a substrate sequentially; by forming the three layers on temporary substrates respectively and sticking them each other; or by forming the two of the three layers on a substrate sequentially, forming other layer on a temporary substrate and transferring the layer on the double-layered structure.

When the embodiment of the retarder comprising at least one optically anisotropic layer formed of a polymer film and at least one optically anisotropic layer formed of liquid-crystalline molecules is prepared, the polymer film layer can be utilized as a substrate for supporting the layer formed of liquid-crystalline molecules. For example, a triacetyl cellulose film is optically negative anisotropy and thus used for a third optically anisotropic layer, and also used as a substrate supporting a second optically layer formed of liquid-crystalline molecules. The first layer may be laminated thereon by applying a composition comprising a liquid-crystalline compound to the surface of the second layer; by sticking an optically anisotropic polymer film on the surface of the second layer; or by forming a first optically anisotropic layer formed of fixed liquid-crystalline molecules on a temporary substrate and transferring the layer on the surface of the second layer. The embodiment comprising a second optically anisotropic layer formed of a stretched polymer film may be prepared by applying a composition comprising a liquid-crystalline compound to the one surface of the polymer film to form a first or third optically anisotropic layer. The other optically anisotropic layer may be laminated by applying a composition comprising a liquid-crystalline compound to the other surface of the polymer film; by sticking an optically anisotropic polymer film on the other surface of the polymer film; or by forming the other optically anisotropic layer formed of fixed liquid-crystalline molecules on a temporary substrate and transferring the layer on the other surface of the polymer film.

The embodiment comprising the three optically anisotropic layers formed of polymer films respectively may be prepared by sticking them each other, if necessary, with an adhesive agent in a known manner.

The polymer film which is utilized as a transparent substrate may be also function as at least one of the three optically anisotropic layers, as a linear polarizing film or as both of them.

[Elliptically Polarizing Plate]

The elliptically polarizing plate of the present invention comprises the first, second and third optically anisotropic layers and a linear polarizing film. One preferred embodiment of the present invention comprises a linear polarizing film and the first, second and third optically anisotropic layers in this order. This order only indicates a layer construction order, and doesn't indicate a laminating order.

The retarder of the present invention can be especially advantageously used as quarter wave plates in reflective liquid-crystal display devices, quarter wave plates in pickups for writing on optical discs, or quarter wave plates in anti-reflection coatings. Typically, quarter wave plates are used as elliptically polarizing plates in combination with linear polarizer films. Thus, retarders can be easily incorporated into intended devices such as reflective liquid-crystal display devices when they are combined with linear polarizer films to form elliptically polarizing plates.

Linear polarizer films used in the present invention include iodine-based polarizer films, dye-based polarizer films including dichroic dyes and polyene-based polarizer films. Iodine-based polarizer films and dye-based polarizer films are typically prepared with polyvinyl alcohol-based films. The transmission axis of the linear polarizer film usually corresponds to the direction perpendicular to the drawing direction of the film. The linear polarizer film typically has a protective film on each side. In the present invention, however, an optically anisotropic layer or a transparent substrate having thereon can serve as a protective film on one side of the linear polarizer film. When a separate protective film is used other than the optically anisotropic layer or the transparent substrate, a cellulose ester film having a high optical

isotropy, especially a triacetyl cellulose film, is desirably utilized as a protective film. The Rth of the protective film is desirably in the range of 0 to 50 nm, more desirably 0 to 30 nm and much more desirably 0 to 20 nm.

It is also noted that the Rth of the protective film is desirably from 30 to 250 nm smaller than that of the third optically anisotropic layer. Especially, a protective film nearer to an optically anisotropic layer, desirably the first optically anisotropic layer, is preferably from 30 to 250 nm smaller than that of the third optically anisotropic layer. On the other hand, the linear polarizing film may be disposed in contact with the surface of the first optically anisotropic layer so that the first layer functions as a protective layer of the linear polarizing film. In the present embodiment, there is no layer other than an optically isotropic adhesive layer, which is formed of adhesive such as acryl derivatives, epoxy derivatives or ethylene-vinyl acetate derivatives, between the linear polarizing film and the first or third layer. The optically isotropic adhesive layers are described in JPA No. 1997-242434.

[Liquid-crystal Displays]

The elliptically polarizing plate of the preset invention may be incorporated into a LCD as a quarter wave plate. The LCD comprising a quarter wave plate is described in JPA No.1998-186357. Generally, a reflective-type LCD comprises a light reflector, a liquid-crystal cell and a linear polarizing film in this order. The retarder may be placed between the light reflector and the linear polarizing plate, for example between the light reflector and the liquid-crystal layer of the cell or between the liquid-crystal layer of the cell and the linear polarizing film. The light reflector may be supported by a substrate also supporting the linear polarizing film. In other words, in the case where a light reflective layer may be formed on the inner surface of a substrate of the liquid-crystal cell, and the substrate having the light reflective layer thereon can function as a light reflector. In such a case, the retarder may be disposed between the light reflective layer and the liquid-crystal layer of the cell.

One preferred embodiment is an elliptically polarizing plate comprising the three optically anisotropic layers and the linear polarizing film where the third optically anisotropic layer is nearest to the linear polarizing film.

The liquid-crystal cell generally comprises a pair of substrates having a transparent electrode thereon and a rod-like liquid-crystal layer sandwiched by the substrates. The TN (twisted nematic)-type liquid-crystal cell is desirable. The twisted angle of the TN-type cell is desirably in the range of 45 to 90 degrees. A color filter may be disposed between the liquid-crystal cell and the linear polarizing film.

The retarder and elliptically polarizing plate of the present invention may be used for various applications other than the above mentioned applications. They may be used in transflective LC devices, guest-host LC devices, touch-sensitive panels, cholesteric reflective-type polarizing plates, electro luminescence (EL) devices and the like.

The retarders and elliptically polarizing plates may be disposed at one side or both sides of the liquid-crystal cell.

Example

The present invention will specifically be described referring to the specific examples.

[Example 1]

(Preparation of a retarder)

· Preparation of an optically anisotropic layer (A)

A triacetyl cellulose roll film in the form of 100 micro meters in thickness, 500 mm in width and 500 m in length was used as a transparent substrate. The Rth of the film was measured with a birefringence measuring instrument, "KOBRA-21ADH" manufactured by Oj i Scientific Instruments, and it was found that the Rth at 589.3 nm of the film was 20 nm.

A diluted solution of Polymer PA-132 shown bellow was continuously applied to a surface of the film, to form a layer having a thickness of 0.5 micro meters. Then, a rubbing treatment was continuously performed to a surface of the layer in a direction at 16 degrees clockwise relative to the longitudinal direction of the transparent substrate, to form an orthogonal alignment layer.

Polymer PA-132 for an orthogonal alignment layer

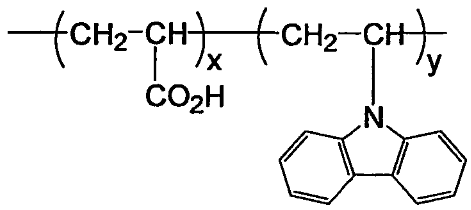

x:y (mole fractions) =70:30

A coating solution of the composition below was continuously applied to the rubbed surface of the alignment layer with a bar coater, dried, heated (matured in alignment) and further irradiated with UV rays to form an optically anisotropic layer (A), having a thickness of 1. 6 micro meters. The optically anisotropic layer (A) had a slow axis in a direction at 74 degrees anticlockwise relative to the longitudinal direction of the transparent substrate. The retardation value at 550 nm of the layer (A) was 225 nm.

Composition of the coating solution for the optically anisotropic layer (A)

Rod-like liquid-crystalline compound (1) 14.5 wt %

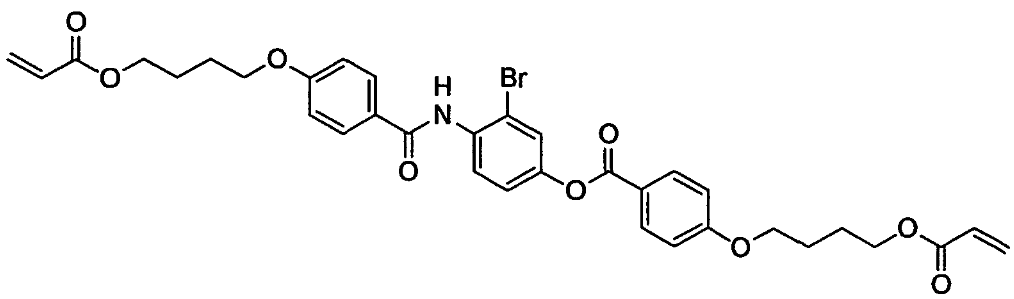

Photo sensitizer (1) 0.15 wt%

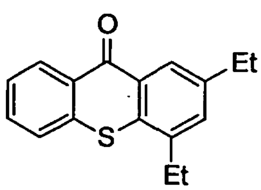

Photo polymerization initiator (1) 0.44 wt%

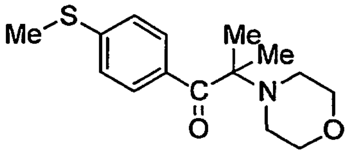

Homogenous alignment promoter (1) 0.03 wt%

(continued)

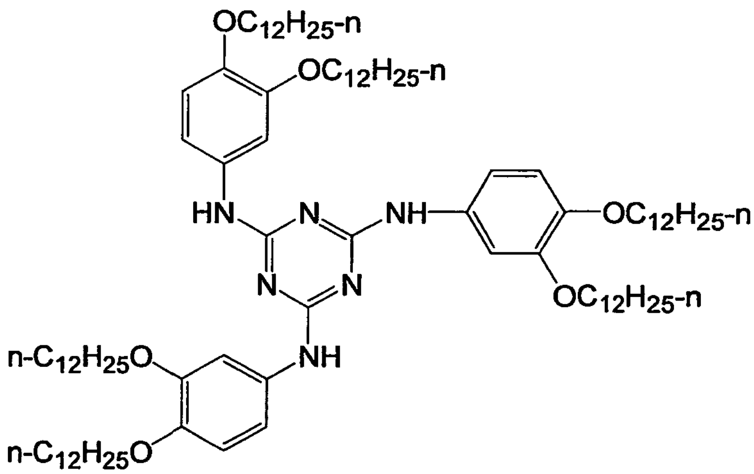

| | |
|---|---|
| Methyl ethyl ketone | 84.9 wt% |

· Preparation of an optically anisotropic layer (B)

A diluted solution of Polymer (2) shown bellow was continuously applied to a surface of the optically anisotropic layer (A), to form a layer having a thickness of 0.5 micro meters. Then, a rubbing treatment was continuously performed in a direction at 58 degrees clockwise relative to the slow axis of the layer (A) and at 16 degrees anticlockwise relative to longitudinal direction of the transparent substrate, to form an alignment layer. A coating solution of the above mentioned composition was continuously applied to the rubbed surface of the alignment layer with a bar coater, dried, heated (matured in alignment), and further irradiated with UV rays to form an optically anisotropic layer (B) having a thickness of 0.8 micro meters. The retardation at 550 nm of the layer (B) was 113 nm.

Polymer (2) for an alignment layer

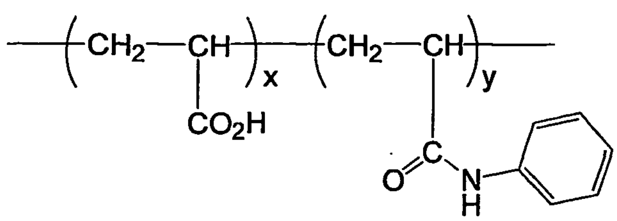

x:y(mole fraction)=70:30

· Preparation of an optically anisotropic layer (c)

A diluted solution of a polyvinyl alcohol modified with long chain alkyls, "MP-203" manufactured by KURARAY Co., Ltd., was continuously applied to a surface of the optically anisotropic layer (B), to form a layer. Then a rubbing treatment was performed a surface of the layer in the longitudinal direction of the transparent substrate, to form an alignment layer.

A coating solution of the composition bellow was continuously applied to the rubbed surface of the alignment layer with a bar coater, dried, heated (matured in alignment), and further irradiated with UV rays to form an optically anisotropic layer (C) having a thickness of 1.0 micro meters. The nx and ny of the optically anisotropic layer (c) were substantively equal to each other and the Rth at 589.3 nm of the layer (C) was 63 nm. Thus, a retarder having the optically anisotropic layers (A), (B) and (C) was obtained. The retardations at 450 nm, 550 nm and 650 nm of the retarder were respectively 118nm, 140 nm and 148 nm, and the retardation-wavelength ratios, values of (a retardation)/(a wavelength) at the three wavelengths were respectively in the range from 0.2 to 0.3.

Composition of the coating solution for the optically anisotropic layer (C)

| | |
|---|---|
| Discotic liquid-crystalline compound (1) | 13.0 wt% |

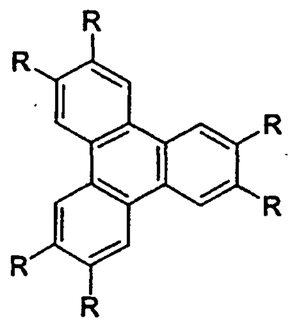

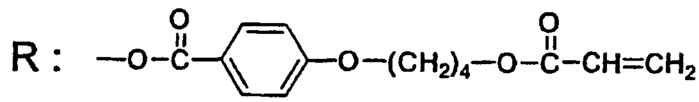

| | |
|---|---|
| Photo sensitizer (1) above | 0.13 wt% |
| Photo polymerization initiator (1) above | 0.39 wt% |
| Homogenous alignment promoter above | 0.13 wt% |
| Methyl ethyl ketone | 86.4 wt% |

(Preparation of an elliptically polarizing plate)

A polyvinyl alcohol roll film having a thickness of 80 micro meters was continuously stretched five-folded in an iodine aqueous solution and dried. Thus, a linear polarizing roll film was obtained. A saponified cellulose triacetate roll film and the obtained roll retarder were continuously laminated on either surfaces of the linear polarizing roll film respectively. Thus, an elliptically polarizing plate was obtained. The angle between the transmission axis of the linear polarizing film and the slow axis of the optically anisotropic layer (A) was 16 degrees and the angle between the transmission axis and the slow axis of the optically anisotropic layer (B) was 74 degrees.

[Example 2]

(Evaluation of viewing angles)

A reflective-type LCD comprising a nematic liquid-crystal cell was prepared. A pair of electrode substrates was placed opposite each other with a gap of 2.7 micro meters and the gap was filled with a nematic liquid-crystal, having a $\Delta n$ of 0.098 and a dielectric constant anisotropy of +11. The twisted angle of the nematic liquid-crystal was predetermined 60 degrees by a rubbing axis of a polyimide alignment layer. The substrate, disposed nearer to an observer, had an ITO electrode layer and the other substrate a concavo-convex aluminum electrode layer as an opposite electrode of the ITO electrode. The elliptically polarizing plate was incorporated into the LCD so that the transmission axis of the linear polarizing film and the long axis of the liquid-crystalline molecules at the central area in the depth direction of the cell cross at 15 degrees.

The LCD was placed in a fluorescent lightened room and the reflective brightness of the LCD was measured with a spectroradio-luminance meter. The LCD was placed horizontally and the luminance meter was displaced by 15 degrees from the direction at 50 degrees relative to the normal line during the measurement, and the contrast ratio, namely the ON to OFF brightness ratio, was calculated from the measurement values. When measured from the position at 45 degree relative to the transmission axis of the linear polarizing film, the minimum contrast ratio, 3.5, was obtained.

[Example 3]

(Preparation of a retarder)

A triacetyl cellulose roll film in the form of 100 micro meters in thickness, 500 mm in width and 500 m in length was used as a transparent substrate-optically anisotropic layer (C). The film had optical properties shown bellow:

nx = 1.48
(nx-ny) x d = 5 nm

Rth = 63 nm.

A diluted solution of the Polymer (2) was continuously applied to the one surface of the film to form a layer having 0.5 micro meters. Then, a rubbing treatment was continuously performed to a surface of the layer in a direction at 16 degrees clockwise relative to the longitudinal direction of the transparent substrate, to form an alignment layer.
A coating solution as same as that used for preparation of the optically anisotropic layer (A) in the Example 1 was continuously applied to the rubbed surfaces with a bar coater, dried, heated (matured in alignment) and further irradiated with UV rays to form an optically anisotropic layer (B), having a thickness of 0.8 micro meters. The optically anisotropic layer (B) had a slow axis in a direction at 16 degrees clockwise relative to the longitudinal direction of the transparent substrate. The retardation at 550 nm of the layer (B) was 113 nm.
A diluted solution of the Polymer PA-132 was continuously applied to on surface of the layer (B), to form a layer having a thickness of 0.5 micro meters. Then, a rubbing treatment was continuously performed to a surface of the layer in a direction at 32 degrees anticlockwise relative to the slow axis of the layer (B) and at 16 degrees anticlockwise relative to the longitudinal direction of the transparent substrate. A coating solution as same as that used for preparation of the optically anisotropic layer (A) in the Example 1 was continuously applied to the rubbed surface with a bar coater, dried, heated (matured in alignment) and further irradiated with UV rays to form an optically anisotropic layer (A), having a thickness of 1.6 micro meters. The retardation at 550 nm of the optically anisotropic layer (A) was 225 nm.
Thus, a retarder having the optically anisotropic layers (A), (B) and (C) was prepared. The retardations at 450 nm, 550nm and 650 nm were respectively 118 nm, 140 nm and 148 nm, and the retardation-wavelength ratios, values of (a retardation)/(a wavelength) at the three wavelengths were respectively in the range from 0.2 to 0.3.

(Preparation of an elliptically polarizing plate)

A linear polarizing film was prepared in the same manner as the Example 1. A saponified cellulose triacetate roll film and the obtained roll retarder were continuously laminated on either surfaces of the linear polarizing roll film respectively. Thus, an elliptically polarizing plate was obtained. The angle between the transmission axis of the linear polarizing film and the slow axis of the optically anisotropic layer (A) was 16 degrees and the angle between the transmission axis and the slow axis of the optically anisotropic layer (B) was 74 degrees.

[Example 4]

(Evaluation of viewing angles)

An evaluation was performed in the same manner as the Example 2, except that the elliptically polarizing plate prepared by the Example 1 was replaced with the elliptically polarizing plate prepared by the Example 3. When measured from the position at 45 degree relative to the transmission axis of the linear polarizing film, the minimum contrast ratio, 3.6, was obtained.

[Comparative Example]

An elliptically polarizing plate was prepared in the same manner as the Example 1, except that the optically anisotropic layer (C) was not prepared.
An evaluation was performed in the same manner as the Example 2, except that the elliptically polarizing plate prepared by the Example 1 was replaced with the elliptically polarizing plate prepared by the Comparative Example. When measured from the position at 60 degree relative to the transmission axis of the linear polarizing film, the minimum contrast ratio, 2.0, was obtained.

Industrial Availability

The present invention can provide retarders and elliptically anisotropic polarizing plates contributing to improvement in viewing angles of liquid-crystal displays.

## Claims

1. A retarder having retardation to wavelength ratios in a range from 0.2 to 0.3 at 450 nm, 550nm and 650nm respectively, comprising:

a first optically anisotropic layer substantially generating a phase difference of π at 550 nm,
a second optically anisotropic layer substantially generating a phase difference of π/2 at 550 nm, and
a third optically negative anisotropic layer.

**2.** The retarder of claim 1 wherein at least one of the first and second layers is formed of a composition comprising a liquid crystal compound.

**3.** The retarder of claim 1 or 2 wherein the third layer is formed of a composition comprising a liquid crystal compound.

**4.** The retarder of claim 1 or 2 wherein the third layer is formed of triacetyl cellulose.

**5.** An elliptical polarizing plate comprising a linear polarizing film and a retarder according to claim 1.

**6.** The elliptical polarizing plate of claim 5 wherein at least one of the first and second layers is formed of a composition comprising a liquid crystal compound.

**7.** The elliptical polarizing plate of claim 5 or 6 wherein the third layer is formed of a composition comprising a liquid crystal compound.

**8.** The elliptical polarizing plate of claim 5 or 6 wherein the third layer is formed of triacetyl cellulose.

**9.** The elliptical polarizing plate of any one of claims 5 to 8, further comprising a protective film for protecting the linear polarizing film wherein Rth, defined by the following formula, of the third optically negative anisotropic layer is from 30 to 250 nm larger than that of the protective film, at 589.3 nm:

$$Rth = [\{(nx + ny)/2\}-nz] \times d$$

where nx and ny are major refractive indexes in plane of the layer or film, nz is a major refractive index along a thickness direction of the film or the layer, and d is a thickness of the film or the layer.

**10.** The elliptical polarizing plate of any one of claims 5 to 8, wherein no layer other than an optically isotropic adhesive layer is disposed between the linear polarizing film and the first or third layer.

**Patentansprüche**

**1.** Retardierer mit Verhältnissen von Retardation zu Wellenlänge im Bereich von 0,2 bis 0,3 bei 450 nm, 550 nm und 650 nm, umfassend:

eine erste optisch anisotrope Schicht, die im Wesentlichen einen Phasenunterschied von π bei 550 nm generiert,
eine zweite optisch anisotrope Schicht, die im Wesentlichen einen Phasenunterschied von π/2 bei 550 nm generiert und
eine dritte optisch negative anisotrope Schicht.

**2.** Retardierer gemäß Anspruch 1, worin mindestens eine von der ersten und der zweiten Schicht aus einer Zusammensetzung gebildet ist, die eine Flüssigkristallverbindung umfasst.

**3.** Retardierer gemäß Anspruch 1 oder 2, worin die dritte Schicht aus einer Zusammensetzung gebildet ist, die eine Flüssigkristallverbindung umfasst.

**4.** Retardierer gemäß Anspruch 1 oder 2, worin die dritte Schicht aus Triacetylcellulose gebildet ist.

**5.** Elliptisch polarisierende Platte, umfassend eine linear polarisierende Folie und einen Retardierer gemäß Anspruch 1.

**6.** Elliptisch polarisierende Platte gemäß Anspruch 5, worin mindestens eine von der ersten und der zweiten Schicht aus einer Zusammensetzung gebildet ist, die eine Flüssigkristallverbindung umfasst.

7. Elliptisch polarisierende Platte gemäß Anspruch 5 oder 6, worin die dritte Schicht aus einer Zusammensetzung gebildet ist, die eine Flüssigkristallverbindung umfasst.

8. Elliptisch polarisierende Platte gemäß Anspruch 5 oder 6, worin die dritte Schicht aus Triacetylcellulose gebildet ist.

9. Elliptisch polarisierende Platte gemäß irgendeinem der Ansprüche 5 bis 8, ferner umfassend einen Schutzfilm zum Schutz der linear polarisierenden Folie, worin Rth, definiert durch die folgende Formel, der dritten optisch negativen anisotropen Schicht um 30 bis 250 nm größer ist als die des Schutzfilms, bei 589,3 nm:

$$Rth = [\{(nx + ny)/2\} - nz] \times d$$

worin nx und ny die Hauptbrechungsindices in der Ebene der Schicht oder der Folie sind, nz der Hauptbrechungsindex entlang der Dicke der Folie oder der Schicht ist und d die Dicke der Folie oder der Schicht ist.

10. Elliptisch polarisierende Platte gemäß irgendeinem der Ansprüche 5 bis 8, worin keine Schicht außer einer optisch isotropen Adhesivschicht zwischen der linear polarisierenden Folie und der ersten oder dritten Schicht angeordnet ist.

**Revendications**

1. Retardateur ayant un retardement par rapport à des rapports de longueur d'onde dans une plage de 0,2 à 0,3 respectivement à 450 nm, 550 nm et 650 nm, comprenant :

   une première couche optiquement anisotrope générant substantiellement une différence de phase de π à 550 nm,
   une deuxième couche optiquement anisotrope générant substantiellement une différence de phase de π/2 à 550 nm, et
   une troisième couche optiquement anisotrope négative.

2. Retardateur selon la revendication 1, dans lequel au moins une des première et deuxième couches est formée d'une composition comprenant un composé à cristaux liquides.

3. Retardateur selon la revendication 1 ou 2, dans lequel la troisième couche est formée d'une composition comprenant un composé à cristaux liquides.

4. Retardateur selon la revendication 1 ou 2, dans lequel la troisième couche est formée de cellulose triacétylique.

5. Plaque de polarisation elliptique comprenant un film de polarisation linéaire et un retardateur selon la revendication 1.

6. Plaque de polarisation elliptique selon la revendication 5, dans laquelle au moins une des première et deuxième couches est formée d'une composition comprenant un composé à cristaux liquides.

7. Plaque de polarisation elliptique selon la revendication 5 ou 6, dans laquelle la troisième couche est formée d'une composition comprenant un composé à cristaux liquides.

8. Plaque de polarisation elliptique selon la revendication 5 ou 6, dans laquelle la troisième couche est formée de cellulose triacétylique.

9. Plaque de polarisation elliptique selon l'une quelconque des revendications 5 à 8, comprenant en outre un film protecteur pour protéger le film de polarisation linéaire dans laquelle Rth, défini par la formule suivante, de la troisième couche optiquement anisotrope négative est de 30 à 250 nm plus grand que celui du film protecteur, à 589,3 nm :

$$Rth = [\{(nx + ny) / 2\} - nz] \times d$$

où nx et ny sont des indices de réfraction principaux dans un plan de la couche ou du film, nz est un indice de réfraction principal le long d'une direction d'épaisseur du film ou de la couche, et d est une épaisseur du film ou de la couche.

**10.** Plaque de polarisation elliptique selon l'une quelconque des revendications 5 à 8, dans laquelle aucune couche autre qu'une couche adhésive optiquement isotrope n'est disposée entre le film de polarisation linéaire et la première ou troisième couche.

Ｆｉｇ．１

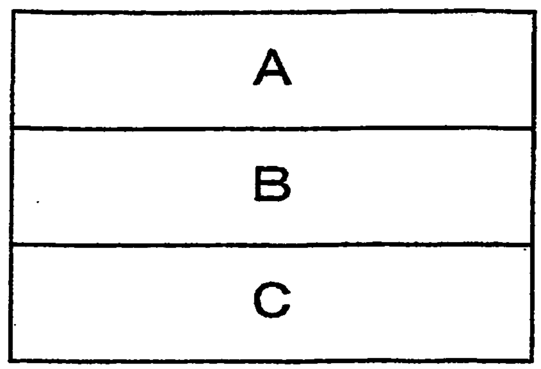


Ｆｉｇ．２

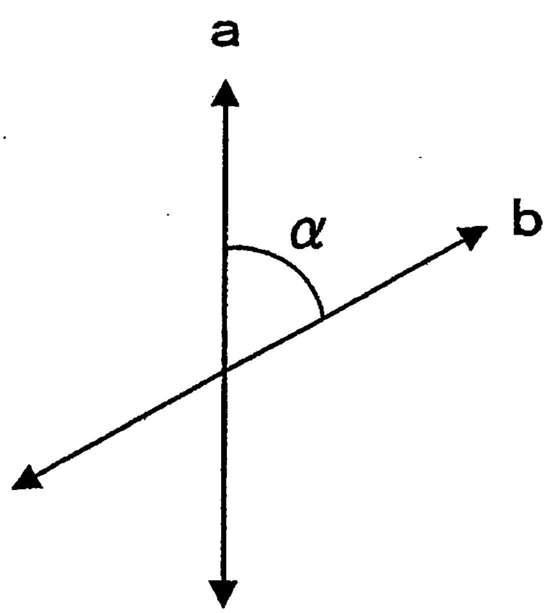

Fig. 3

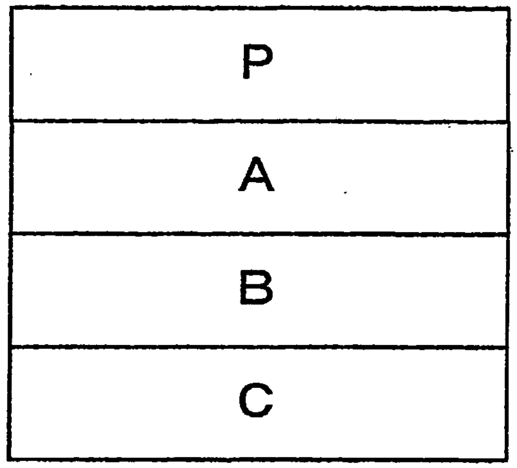


Fig. 4

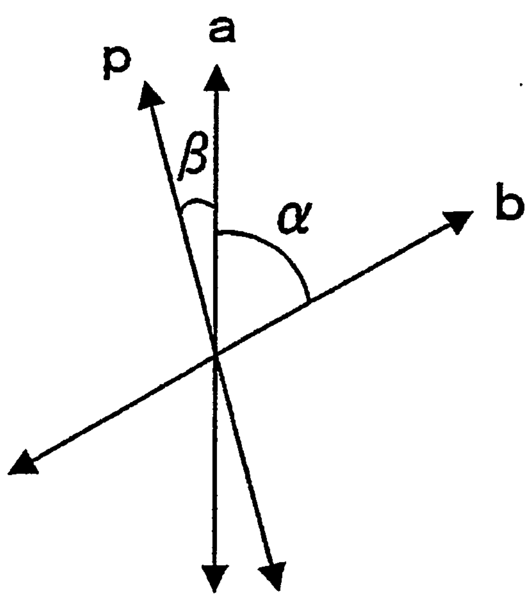

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10090521 A
- JP 10068816 A
- JP 2001000483 A
- US 4683327 A
- US 5622648 A
- US 5770107 A
- WO 9522586 A
- WO 9524455 A
- WO 9700600 A
- WO 9823580 A
- WO 9852905 A
- JP 1272551 A
- JP 6016616 A
- JP 7110469 A
- JP 11080081 A
- JP 2001328973 A
- JP 8027284 A
- US 2367661 A
- US 2367670 A
- US 2448828 A
- US 2722512 A
- US 3046127 A
- US 2951758 A
- US 3549367 A
- JP 60105667 A
- US 4239850 A
- US 4212970 A
- JP 9152509 A
- JP 2002062427 A
- JP 2002268068 A
- JP 2009619 B
- JP 7333433 A
- JP 9242434 A
- JP 10186357 A


### Non-patent literature cited in the description


- *Makromol. Chem.,* 1989, vol. 190, 2255
- *Advanced Materials,* 1993, vol. 5, 107
- *Mol. Crysr. Liq. Cryst.,* 1981, vol. 71, 111
- **C. DESTRADE et al.** Quarterly Chemistry Survey, No. 22, The Chemistry of Liquid-crystals. Japan Chem. Soc, 1994
- *Angew. Chem. Soc. Chem. Comm.,* 1985, 1794
- **B. KOHNE et al.** *J. Am. Chem. Soc.,* 1994, vol. 116, 2, 655